(19) **Europäisches Patentamt** / **European Patent Office** / **Office européen des brevets**

(11) **EP 4 096 060 B1**

(12) **EUROPEAN PATENT SPECIFICATION**

(45) Date of publication and mention
of the grant of the patent:
**09.10.2024 Bulletin 2024/41**

(21) Application number: **22734466.0**

(22) Date of filing: **04.03.2022**

(51) International Patent Classification (IPC):
*H02J 50/90* (2016.01)     *H02J 50/00* (2016.01)
*H02J 50/80* (2016.01)     *H02J 7/00* (2006.01)

(52) Cooperative Patent Classification (CPC):
**H02J 7/0047; H02J 50/005; H02J 50/80;**
**H02J 50/90;** Y02B 40/00

(86) International application number:
**PCT/CN2022/079158**

(87) International publication number:
**WO 2022/213753 (13.10.2022 Gazette 2022/41)**

(54) **WIRELESS CHARGING ALIGNMENT DETECTION METHOD AND ELECTRONIC DEVICE**

VERFAHREN ZUR ERKENNUNG DER AUSRICHTUNG VON DRAHTLOSEM LADEN UND ELEKTRONISCHE VORRICHTUNG

PROCÉDÉ DE DÉTECTION D'ALIGNEMENT DE CHARGE SANS FIL ET DISPOSITIF ÉLECTRONIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **07.04.2021 CN 202110374407**

(43) Date of publication of application:
**30.11.2022 Bulletin 2022/48**

(73) Proprietor: **Honor Device Co., Ltd.**
**Shenzhen, Guangdong 518040 (CN)**

(72) Inventors:
• **DUAN, Weiliang**
**Shenzhen, Guangdong 518040 (CN)**
• **LIU, Jian**
**Shenzhen, Guangdong 518040 (CN)**
• **ZHU, Chen**
**Shenzhen, Guangdong 518040 (CN)**

(74) Representative: **Gill Jennings & Every LLP**
**The Broadgate Tower**
**20 Primrose Street**
**London EC2A 2ES (GB)**

(56) References cited:
CN-A- 105 825 589     CN-A- 108 988 513
CN-A- 110 994 731     CN-A- 111 373 629
CN-A- 112 152 277     CN-A- 113 178 957
US-A1- 2014 002 013     US-A1- 2016 344 241

## Description

### TECHNICAL FIELD

This application relates to the field of wireless charging technologies, and in particular, to a wireless charging alignment detection method and an electronic device.

### BACKGROUND

With continuous development of wireless charging technologies, the wireless charging technologies are applied to wireless charging for electronic devices. Wireless charging is also referred to as inductive charging. A main advantage of the wireless charging is that the wireless charging is convenient and is not limited by a wire. An electronic device can be automatically charged as long as the electronic device is placed on a charging base of a wireless charger. Currently, a wireless charging technology based on a Qi standard is usually used. The wireless charging technology based on the Qi standard requires that a distance between a wireless charging receive coil of the electronic device and a wireless charging transmit coil of the wireless charger is within a specific distance range. When the distance between the receive coil and the transmit coil is excessively long, a charging rate decreases or even charging fails. When the electronic device is placed on the charging base of the wireless charger for charging, only a "charging" icon and an icon of a current battery level of the electronic device are displayed on a display of the electronic device. A user cannot know whether the electronic device is well aligned with the wireless charging base. Therefore, when the wireless charging base is not well aligned with the electronic device, a charging rate for the electronic device is low.

CN112152277A discloses an information display method, an information display device and a storage medium, and belonging to the technical field of wireless charging.

### SUMMARY

In a first aspect of the present invention, there is provided a wireless charging alignment detection method according to claim 1.

This application aims to provide a wireless charging alignment detection method and an electronic device, to implement good alignment between a wireless charging base and an electronic device, and improve a charging rate for the electronic device.

According to a first aspect, an embodiment of this application discloses a wireless charging alignment detection method, applied to an electronic device. The electronic device may communicate and interact with a wireless charger, and the wireless charging alignment detection method includes the following.

Device information data sent by the wireless charger is received. The device information data includes but is not limited to a vendor number of the wireless charger, a model identifier of the wireless charger, and the like. A type of the wireless charger may include a horizontal wireless charger and a vertical wireless charger. Each type of wireless charger has a corresponding model.

A charging alignment picture is determined based on the device information data. The electronic device has two types based on whether a charging base picture of the model can be found from a memory of the electronic device. A first type is that the charging base picture of the wireless charger with the model can be found. A second type is that the charging base picture of the wireless charger with the model cannot be found. For the first type, the charging alignment picture displayed on the electronic device may include a real product picture of at least a part of a wireless charging base of the wireless charger. The picture is an overlapping part between the picture of the charging base of the wireless charger and a screen of the electronic device. The picture is displayed in a form in which it seems that a user can see the base of the charger through a frame of the electronic device. For the second type, the charging alignment picture displayed on the electronic device may be a wireless charging receive coil of the electronic device.

A charging prompt interface is displayed, where the charging prompt interface includes the charging alignment picture, and is used to prompt or indicate whether the electronic device is placed in a preferred charging position on the wireless charger. For the first type, when an edge of the picture of the wireless charging base displayed on the electronic device is aligned with an edge of the wireless charger, a center of the wireless charging receive coil of the electronic device, a center of a wireless charging transmit coil on the charging alignment picture, and an actual center of the wireless charging transmit coil of the wireless charger overlap. The user may determine that the electronic device is placed in the preferred charging position on the wireless charger. In this case, the wireless charging receive coil of the electronic device and the wireless charging transmit coil of the wireless charger are in a state of accurate alignment, that is, the electronic device and the wireless charger are in the state of accurate alignment. For the second type, the picture of the wireless charging receive coil of the electronic device shows a position of the charging coil of the electronic device in the electronic device. If most or all of the coil shown in the picture falls outside the wireless charging base, the user may determine that the electronic device is not placed in the preferred charging position on the wireless charger. In this case, the wireless charging receive coil of the electronic device and the wireless charging transmit coil of the wireless charger are in a state of inaccurate alignment, that is, the electronic device and the wireless charger are in the state of inaccurate alignment. The user may move the electronic device to the preferred charging position on the charging base of the wireless charger based on the position of the coil shown in the picture, so that the wireless charging receive coil of the electronic device and the wireless charging transmit coil of the wireless charger are in the state of accurate alignment, that is, the electronic device and the wireless charger are in the state of accurate alignment.

Further, after the electronic device is placed in the preferred charging position on the charging base of the wireless charger, the wireless charging receive coil of the electronic device and the wireless charging transmit coil of the wireless charger are in the state of accurate alignment. The state of accurate alignment may mean that a center position of the wireless charging receive coil of the electronic device is close to a center position of the wireless charging transmit coil of the wireless charger. Specifically, a first threshold may be set to determine whether the electronic device is accurately aligned with the wireless charger.

The first threshold may be customized, and may be a single specific value. For example, a distance between center positions of the wireless charger and the electronic device that is obtained when a charging power at which the wireless charger charges the electronic device reaches 50% of a maximum charging power of the wireless charger is used as the first threshold. For example, when the wireless charger charges the mobile phone by using 50% of the maximum charging power, the distance between the center positions of the coils of the wireless charger and the mobile phone is 10 mm. In this case, after the user places the mobile phone on the wireless charger, if the distance between the center positions of the coils is less than or equal to 10 mm, for example, is 5 mm, the mobile phone and the wireless charger are in the state of accurate alignment. On the contrary, after the user places the mobile phone on the wireless charger, if the distance between the center positions of the coils is greater than 10 mm, for example, is 12 mm, the mobile phone and the wireless charger are in the state of inaccurate alignment. A specific value of the first threshold is not limited in this embodiment of this application.

According to the wireless charging alignment detection method disclosed in the first aspect of this application, the charging alignment picture is displayed on the screen of the electronic device. The technical solution provided in this application helps intuitively instruct the user to place the electronic device in the preferred charging position on the charging base of the wireless charger, so that the distance between the center position of the wireless charging receive coil of the electronic device and the center position of the wireless charging transmit coil of the wireless charger is less than the first threshold. In this way, when the charging base of the wireless charger and the electronic device are not accurately aligned with each other, the user may be prompted to adjust a position of the electronic device on the wireless charging base of the wireless charger, to implement accurate alignment between the electronic device and the wireless charging base of the wireless charger. The technical solution provided in this application improves a charging rate at which the wireless charger charges the electronic device.

According to some embodiments disclosed in the first aspect of this application, determining the charging alignment picture based on the device information data specifically includes:

determining a model of the wireless charger based on the device information data;
performing search based on the model of the wireless charger, to determine whether the electronic device stores a charging base picture corresponding to the model; and
determining at least a part of the charging base picture as the charging alignment picture if a search result is that the electronic device stores the charging base picture corresponding to the model; or
determining a picture of a wireless charging receive coil of the electronic device as the charging alignment picture if a search result is that the electronic device does not store the charging base picture corresponding to the model.

According to the foregoing embodiment disclosed in this application, when the electronic device can find the charging base picture of the wireless charger with the model, at least a part of the charging base picture is displayed as the charging alignment picture, to prompt the user to place the electronic device in the preferred charging position on the wireless charging base. When the electronic device cannot find the charging base picture of the wireless charger with the model, the wireless charging receive coil of the electronic device may further be displayed, to prompt the user to place the electronic device in the preferred charging position on the wireless charging base. This avoids a problem that the electronic device cannot be placed in the preferred charging position on the wireless charger when the electronic device cannot find the charging base picture of the wireless charger with the model, and improves a success rate of alignment between the electronic device and the wireless charger.

According to some embodiments disclosed in the first aspect of this application, the wireless charging alignment detection method further includes:

determining a type of the wireless charger based on the model of the wireless charger, where the type of the wireless charger includes a horizontal charger and a vertical charger; and

if a determining result is that the type of the wireless charger is the horizontal charger, displaying the charging prompt interface specifically includes:

drawing, in a position corresponding to a center of the wireless charging receive coil on a screen of the electronic device, a geometric center of a wireless charging transmit coil in a charging base picture of the horizontal charger, and displaying an overlapping part between the charging base picture and the screen of the electronic device as the charging alignment picture in the charging prompt interface.

According to the foregoing embodiment disclosed in this application, the geometric center of the wireless charging transmit coil in the charging base picture of the horizontal charger is drawn in the position corresponding to the center of the wireless charging receive coil on the screen of the electronic device, and then the overlapping part between the charging base picture and the screen of the electronic device is displayed as the charging alignment picture in the charging prompt interface. In this way, when the charging alignment picture displayed on the screen of the electronic device overlaps an edge of the horizontal charger, an actual center of the wireless charging transmit coil of the horizontal charger, the center of the wireless charging receive coil of the electronic device, and the center of the wireless charging transmit coil in the charging alignment picture displayed on the screen of the electronic device basically overlap, and charging efficiency of charging the electronic device by the wireless charger is relatively high.

According to the first aspect of this application, the wireless charging alignment detection method further includes:

determining a type of the wireless charger based on the model of the wireless charger, where the type of the wireless charger includes a horizontal charger and a vertical charger; and

if a determining result is that the type of the wireless charger is the vertical charger, displaying the charging prompt interface specifically includes:

determining a posture of the electronic device, where the posture of the electronic device includes a vertically placed state and a horizontally placed state; and

drawing, based on the posture of the electronic device in a position corresponding to a center of the wireless charging receive coil on a screen of the electronic device, a geometric center of a wireless charging transmit coil in a charging base picture of the vertical charger, and displaying an overlapping part between the charging base picture and the screen of the electronic device as the charging alignment picture in the charging prompt interface.

According to the foregoing embodiment disclosed in this application, the geometric center of the wireless charging transmit coil in the charging base picture of the vertical charger is drawn in the position corresponding to the center of the wireless charging receive coil on the screen of the electronic device, and then the overlapping part between the charging base picture and the screen of the electronic device is displayed as the charging alignment picture in the charging prompt interface. In this way, when the charging alignment picture displayed on the screen of the electronic device overlaps an edge of the vertical charger, an actual center of the wireless charging transmit coil of the vertical charger, the center of the wireless charging receive coil of the electronic device, and the center of the wireless charging transmit coil in the charging alignment picture displayed on the screen of the electronic device basically overlap, and charging efficiency of charging the electronic device by the wireless charger is relatively high.

According to some embodiments disclosed in the first aspect of this application, the position corresponding to the center of the wireless charging receive coil is a position of the center of the wireless charging receive coil on a surface of the screen of the electronic device, and the position is determined based on a pixel of the screen of the electronic device. For example, screen resolution of the electronic device is 2640 x 1200, a direction in which a width of the electronic device is located is the x-axis, a direction in which a height of the electronic device is located is the y-axis, a lower left corner of the electronic device is an origin, there are 1200 pixels in the width direction of the electronic device, and there are 2640 pixels in the height direction of the electronic device. In this case, coordinates of a center position of the center of the wireless charging receive coil relative to the x-axis and the y-axis are (600, 800).

According to some embodiments disclosed above in this application, the screen resolution of the electronic device is fixed, and coordinates of a position of each pixel of the screen resolution are uniquely determined. Therefore, when the position of the center of the wireless charging receive coil is determined based on the pixel of the electronic device, accuracy and uniqueness are relatively high.

According to some embodiments disclosed in the first aspect of this application, when the electronic device is placed in the preferred charging position on the wireless charger, a charging rate displayed on the screen of the electronic device is higher than a preset value.

When the electronic device is not placed in the preferred charging position on the wireless charger, a charging rate displayed on the screen of the electronic device is lower than the preset value. Specifically, the user may further determine, based on a value of the charging rate displayed on the electronic device, whether the electronic device is well aligned with the wireless charger. For example, a maximum charging rate of the wireless charger is 17W, and a minimum preset value of the charging rate when the wireless charger is well aligned with the electronic device is 13W. In this case, the charging rate 121 displayed on the screen of the electronic device is 15W. 15W is greater than the preset value 13W. This indicates that the electronic device is well aligned with the wireless charger in this case.

According to some embodiments disclosed above in this application, the charging rate may be displayed on the screen of the electronic device, and the user may view the charging rate through the screen of the electronic device, and determine, based on a value relationship between the charging rate and the preset value, whether the electronic device is in the preferred charging position on the wireless charger. In this way, whether the electronic device is in the preferred charging position on the wireless charger may be determined based on both the charging alignment picture and the value relationship between the charging rate and the preset value. This improves precision of good alignment between the electronic device and the wireless charger.

According to some embodiments disclosed in the first aspect of this application, the charging prompt interface includes a first identifier, and the first identifier is used to indicate a center position of the wireless charging receive coil in the electronic device. The first identifier may be a cross cursor displayed on the screen of the electronic device, and the cross cursor may indicate the center position of the wireless charging receive coil.

According to the foregoing embodiment disclosed in this application, the center position of the wireless charging receive coil of the electronic device is identified by using the first identifier, so that the user can conveniently view the center position of the wireless charging receive coil of the electronic device. The user is prompted to perform good alignment between the electronic device and the wireless charger.

According to some embodiments disclosed in the first aspect of this application, the charging prompt interface further includes at least one of a current battery level of the electronic device, a charging time, a charging rate, and a charging status.

According to some embodiments disclosed above in this application, the charging rate may be displayed on the screen of the electronic device, and the user may view the charging rate through the screen of the electronic device, and determine, based on a value relationship between the charging rate and the preset value, whether the electronic device is in the preferred charging position on the wireless charger. In this way, whether the electronic device is in the preferred charging position on the wireless charger may be determined based on both the charging alignment picture and the value relationship between the charging rate and the preset value. This improves precision of good alignment between the electronic device and the wireless charger. In addition, the current battery level of the device, the charging time, the charging status, and the like are displayed in the charging prompt interface, so that the user can conveniently learn of current detailed information of the electronic device, thereby improving user experience.

According to some embodiments disclosed in the first aspect of this application, the charging alignment detection method further includes:
storing the charging alignment picture. Specifically, the charging alignment picture may be stored in a memory of the electronic device, or the charging alignment picture may be stored in a cloud server of the electronic device.

According to some embodiments disclosed above in this application, after the electronic device completes the alignment process with the wireless charger, the electronic device may store the charging alignment picture in the memory of the electronic device. When the user charges the same electronic device next time by using the wireless charger with the same model, the electronic device may directly search the memory for the charging alignment picture and display the picture on the screen of the electronic device. This improves efficiency of alignment between the electronic device and the wireless charger.

According to some embodiments disclosed in the first aspect of this application, before the device information data sent by the wireless charger is received, the wireless alignment detection method further includes:

The electronic device sends a private protocol to the wireless charger. The private protocol may be a communication packet customized by a vendor in a specified field of the Qi standard protocol based on the standard Qi protocol. The customized communication packet refers to a model of a wireless charger defined in a specified field 0x18 of the Qi standard protocol. For example, when a packet header specified in the standard Qi protocol is 01, a field represented by 01 is a signal strength packet; or when a packet header specified in the standard Qi protocol is 0x18, a field represented by 0x18 is a dedicated data packet, and the dedicated data packet may include the model of the wireless charger.

The device information data is device information data sent by the wireless charger to the electronic device in response to the private protocol.

According to some embodiments disclosed above in this application, the electronic device and the wireless charger transmit the device information data according to the private protocol. This avoids device information data theft and tampering, and ensures device information data security.

According to some embodiments disclosed in the first aspect of this application, that the electronic device sends a private protocol to the wireless charger includes:

The electronic device sends the private protocol to the wireless charger in response to a communication signal sent by the wireless charger, where the communication signal is a PING signal.

The wireless charger sends the PING signal to the electronic device. As a transmit end, the wireless charger may periodically send the PING signal, for example, send the signal once every 500 milliseconds. Usually, duration for sending the PING signal by the transmit end each time is 90 milliseconds. A transmit frequency of the PING signal is usually between 100 kHz and 205 kHz. The electronic device returns a signal strength packet to the wireless charger after receiving the PING signal. The electronic device serves as a receive end, and in response to the received PING signal, the receive end returns the signal strength packet to the wireless charger. The signal strength packet is used to indicate, to the wireless charger, that a receive end is placed on the charging base of the wireless charger. The signal strength packet includes information such as signal strength of the PING signal received by the electronic device.

According to the foregoing disclosed embodiments of this application, the electronic device feeds back the signal strength to the wireless charger based on the signal strength of the received PING signal. The wireless charger can learn, based on the signal strength, whether the electronic device is placed on the wireless charger. In addition, because a transmit frequency of the PING signal is usually between 100 kHz and 205 kHz, a placement position between the wireless charger and the electronic device can be tested almost in real time, so that real-time performance is good.

According to a second aspect, an embodiment of this application discloses an electronic device, including:

a memory, where the memory stores code; and
a processor, where when the processor executes the code, the foregoing wireless charging alignment detection method is implemented.

According to the electronic device disclosed in the second aspect of this application, a charging alignment picture is displayed on a screen of the electronic device. The technical solution provided in this application helps intuitively instruct a user to place the electronic device in a preferred charging position on a charging base of a wireless charger, so that a distance between a center position of a wireless charging receive coil of the electronic device and a center position of a wireless charging transmit coil of the wireless charger is less than a first threshold. In this way, when the charging base of the wireless charger and the electronic device are not accurately aligned with each other, the user may be prompted to adjust a position of the electronic device on the wireless charging base of the wireless charger, to implement accurate alignment between the electronic device and the wireless charging base of the wireless charger. The technical solution provided in this application improves a charging rate at which the wireless charger charges the electronic device.

Other features and corresponding beneficial effects of this application are described below in the specification, and it should be understood that at least some beneficial effects are apparent from the description in the specification of this application.

## BRIEF DESCRIPTION OF DRAWINGS

FIG. 1A and FIG. 1B are respectively schematic outline diagrams of a horizontal wireless charger and a vertical wireless charger that are applicable to a wireless charging alignment detection method disclosed in an embodiment of this application;

FIG. 2A to FIG. 2F each are a schematic diagram of charging alignment of a horizontal wireless charger of a type 1 according to an embodiment of this application;

FIG. 2G to FIG. 2M each are a schematic diagram of charging alignment of a vertical wireless charger of a type 1 according to an embodiment of this application;

FIG. 3A to FIG. 3H each are a schematic diagram of charging alignment of a wireless charger of a type 2 according to an embodiment of this application;

FIG. 4A to FIG. 4E each are a schematic diagram of a wireless charger according to an embodiment of this application;

FIG. 5A is a schematic diagram of a structure of a mobile phone according to an embodiment of this application;

FIG. 5B is a block diagram of a software structure of a mobile phone according to an embodiment of this application;

FIG. 6A is a time sequence diagram of communication between an electronic device and a wireless charger according to an embodiment of this application;

FIG. 6B is a schematic flowchart of a specific implementation in which an electronic device displays a charging prompt interface according to an embodiment of this application;

FIG. 6C is a schematic diagram of an overlapping part between a screen of an electronic device and a charging base picture according to an embodiment of this application;

FIG. 7 is a schematic diagram of an example structure of an electronic device according to an embodiment of this application; and
FIG. 8 is a schematic diagram of an example structure of an SoC according to an embodiment of this application.

## DESCRIPTION OF EMBODIMENTS

Embodiments of this application provide a wireless charging alignment detection method. The method may be applied to an electronic device such as a mobile phone, a notebook computer, a virtual reality device, an augmented reality vehicle-mounted device, or an intelligent wearable device. At least a display, an input device, and a processor are disposed in the electronic device.

After the electronic device is placed on a wireless charger, the wireless charger charges the electronic device, and the wireless charger may communicate and interact with the electronic device.

The following uses a mobile phone as an example of an electronic device 10 for explanation. The mobile phone 10 may be placed on a wireless charger 20 for charging. The wireless charger 20 charges the mobile phone 10 in a wireless charging manner. The technical solutions according to embodiments of this application are applicable to wireless chargers with different types of structures.

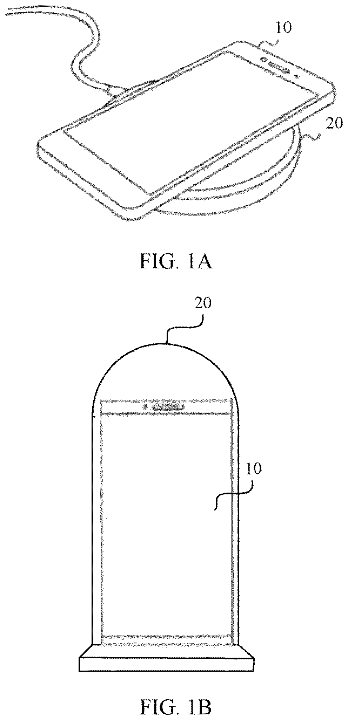

The wireless charger 20 may be a vertical wireless charger or a horizontal wireless charger based on a type of the wireless charger 20. FIG. 1A and FIG. 1B are respectively schematic outline diagrams of a horizontal wireless charger and a vertical wireless charger that are applicable to a wireless charging alignment detection method disclosed in an embodiment of this application. The horizontal wireless charger is a wireless charger whose wireless charging base is horizontal and that performs charging in a manner in which the mobile phone 10 is horizontally placed on the wireless charging base. The vertical wireless charger is a wireless charger that performs charging in a manner in which the mobile phone 10 is vertically placed on a wireless charging base.

For the foregoing mobile phone 10 and wireless charger 20, an embodiment of this application provides a wireless alignment detection method. A charging prompt interface is displayed on a screen of the mobile phone 10, to prompt a user to place the mobile phone 10 at a preferred charging position on the wireless charger, so that a wireless charging receive coil of the mobile phone 10 and a wireless charging transmit coil of the wireless charger 20 are as close as possible or even overlap.

The charging prompt interface displays at least a charging alignment picture of the mobile phone 10 and the wireless charger 20. The charging alignment picture can indicate a position of the wireless charging transmit coil of the wireless charger 20. The user may align an edge of a charging base picture displayed on the mobile phone 10 with an edge of a charging base of the wireless charger 20, or align a center of a picture of a charging base of the wireless charger with a center of the charging base of the wireless charger 20, to instruct the user to place the mobile phone 10 in a preferred charging position on the charging base of the wireless charger 20.

After the mobile phone 10 is placed in the preferred charging position on the charging base of the wireless charger 20, the wireless charging receive coil of the mobile phone 10 and the wireless charging transmit coil of the wireless charger 20 are in a state of accurate alignment. The state of accurate alignment may mean that a center position of the wireless charging receive coil of the mobile phone 10 is close to a center position of the wireless charging transmit coil of the wireless charger 20. Specifically, a first threshold may be set to determine whether the mobile phone 10 is accurately aligned with the wireless charger 20.

The first threshold may be customized, and may be a single specific value. For example, a distance between center positions of the wireless charger 20 and the mobile phone 10 that is obtained when a charging power at which the wireless charger 20 charges the mobile phone 10 reaches 50% of a maximum charging power of the wireless charger is used as the first threshold. For example, when the wireless charger charges the mobile phone by using 50% of the maximum charging power, the distance between the center positions of the coils of the wireless charger and the mobile phone is 10 mm. In this case, after the user places the mobile phone on the wireless charger, if the distance between the center positions of the coils is less than or equal to 10 mm, for example, is 5 mm, the mobile phone and the wireless charger are in the state of accurate alignment. On the contrary, after the user places the mobile phone on the wireless charger, if the distance between the center positions of the coils is greater than 10 mm, for example, is 12 mm, the mobile phone and the wireless charger are in a state of inaccurate alignment. A specific value of the first threshold is not limited in this embodiment of this application.

Based on types of wireless chargers, the charging alignment picture in this application is displayed in different states. The following provides detailed descriptions with reference to the accompanying drawings.

First, each type of wireless charger has a corresponding model, for example, Huawei supercharge vertical wireless charger (Max 40W) CP62 or Huawei supercharge wireless charger (Max 27W) CP61. The model herein refers to a number that can be used to uniquely identify the wireless charger product, and may include a word and/or a digit. For some wireless chargers 20, the mobile phone 10 can identify models of the wireless chargers 20. In this application, this type of chargers whose models can be identified by an electronic device are classified into a type 1. For the charger of the type 1, the mobile phone 10 pre-stores a picture of a charging base of the wireless charger 20 with the model, or the mobile phone 10 can obtain a picture of a charging base of the wireless charger 20 by accessing a server or a cloud database of the mobile phone. For some wireless chargers 20, the mobile phone 10 cannot identify specific models of the wireless chargers. In this application, this type of chargers whose models cannot be identified by an electronic device are classified into a type 2.

The mobile phone 10 may determine the model of the wireless charger 20 based on device information data transmitted by the wireless charger. The device information data may be transmitted between the wireless charger 20 and the mobile phone 10 according to a Qi standard. The device information data includes but is not limited to a vendor number of the wireless charger, a model identifier of the wireless charger, and the like.

The charging alignment picture is used to indicate the user to place the mobile phone 10 in the preferred charging position on the charging base of the wireless charger 20. For the charger of the type 1 and the charger of the type 2, according to embodiments of this application, representation forms of charging alignment pictures displayed on the mobile phone 10 may be different.

For the charger of the type 1, a charging alignment picture displayed on the mobile phone 10 may include a real product picture of at least a part of a wireless charging base of the wireless charger. The picture is an overlapping part between a picture of the charging base of the wireless charger and a screen of the mobile phone 10. The picture is displayed in a form in which it seems that the user can see the base of the charger through a frame of the mobile phone. In this case, when the edge of the picture of the wireless charging base displayed on the mobile phone 10 is aligned with the edge of the wireless charger, the center of the wireless charging receive coil of the mobile phone 10, a center of the wireless charging transmit coil on the charging alignment picture, and the actual center of the wireless charging transmit coil of the wireless charger overlap. The user may determine that the mobile phone 10 is placed in the preferred charging position on the wireless charger 20. In this case, the wireless charging receive coil of the mobile phone 10 and the wireless charging transmit coil of the wireless charger 20 are in the state of accurate alignment, that is, the mobile phone 10 and the wireless charger 20 are in the state of accurate alignment. When the mobile phone 10 is not placed in the preferred charging position on the charging base of the wireless charger 20, the edge of the picture of the charging base of the wireless charger displayed on the mobile phone 10 deviates from the edge of the charging base of the wireless charger 20, and the user may determine that the mobile phone 10 is not placed in the preferred charging position on the wireless charger 20. In this case, the wireless charging receive coil of the mobile phone 10 and the wireless charging transmit coil of the wireless charger 20 are in the state of inaccurate alignment (the distance between the center position of the wireless charging receive coil and the center position of the wireless charging transmit coil exceeds the first threshold), that is, the mobile phone 10 and the wireless charger 20 are in the state of inaccurate alignment.

For the charger of the type 2, because the mobile phone 10 fails to identify a specific model of the charger, a picture of the wireless charging receive coil of the mobile phone is displayed as a charging alignment picture. The picture of the charging coil of the mobile phone shows a position of the charging coil of the mobile phone in the mobile phone. If most or all of the coil shown in the picture falls outside the wireless charging base, the user may determine that the mobile phone 10 is not placed in the preferred charging position on the wireless charger 20. In this case, the wireless charging receive coil of the mobile phone 10 and the wireless charging transmit coil of the wireless charger 20 are in the state of inaccurate alignment, that is, the mobile phone 10 and the wireless charger 20 are in the state of inaccurate alignment. The user may move the mobile phone 10 to the preferred charging position on the charging base of the wireless charger 20 based on the position of the coil shown in the picture, so that the wireless charging receive coil of the mobile phone 10 and the wireless charging transmit coil of the wireless charger 20 are in the state of accurate alignment, that is, the mobile phone 10 and the wireless charger 20 are in the state of accurate alignment.

Therefore, the charging alignment picture is displayed on the screen of the mobile phone 10. The technical solution provided in this application helps intuitively instruct the user to place the mobile phone 10 in the preferred charging position on the charging base of the wireless charger 20, so that the distance between the center position of the wireless charging receive coil of the mobile phone 10 and the center position of the wireless charging transmit coil of the wireless charger 20 is less than the first threshold. In this way, when the charging base of the wireless charger 20 and the mobile phone 10 are not accurately aligned with each other, the user may be prompted to adjust a position of the mobile phone 10 on the wireless charging base of the wireless charger, to implement accurate alignment between the mobile phone 10 and the wireless charging base of the wireless charger 20. The technical solution provided in this application improves a charging rate at which the wireless charger charges the mobile phone 10.

With reference to the accompanying drawings, the following describes a case in which a charging alignment picture is displayed in an electronic device for a horizontal wireless charger of the type 1.

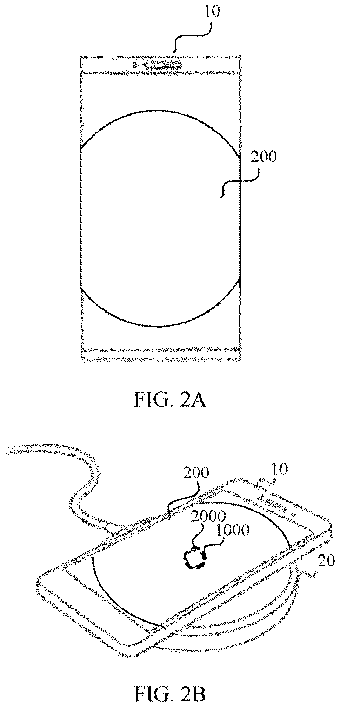

FIG. 2A and FIG. 2B each show a charging alignment picture of a horizontal wireless charger. As shown in FIG. 2A, a charging alignment picture is displayed on the screen of the mobile phone 10 (to clearly display the charging alignment picture, only the mobile phone 10 is shown in FIG. 2A). The picture is displayed in a form in which the user can see a base of the charger through the screen of the mobile phone. A charging alignment picture 200 shows a part or all of a picture of a charging base of a wireless charger with a corresponding model (for example, FIG. 2A shows a part of the picture of the charging base of the wireless charger with the corresponding model). In terms of the charging alignment picture 200, in some embodiments of this application, for the horizontal wireless charger, as shown in FIG. 2B, when the mobile phone 10 is placed on the wireless charging base of the horizontal wireless charger in an optimal manner, the mobile phone 10 displays the charging alignment picture 200. As shown in FIG. 2B, a center 2000 of a wireless charging transmit coil of the charging base of the horizontal wireless charger is located at a center position of the charging alignment picture 200, and a center 1000 of a wireless charging receive coil of the mobile phone 10 basically overlaps the center 2000 of the wireless charging transmit coil of the charging base. When the mobile phone 10 is in a preferred charging position on the wireless charging base, a center of the wireless charging transmit coil on the charging alignment picture 200, the center of the wireless charging receive coil of the mobile phone 10, and the actual center of the wireless charging transmit coil of the wireless charging base basically overlap. This ensures good alignment between the mobile phone 10 and the wireless charging base. It should be noted that the center 2000 of the wireless charging transmit coil and the center 1000 of the wireless charging receive coil in FIG. 2B may be displayed on the screen of the mobile phone 10 for the user to view. To ensure simplicity of information displayed on the screen of the mobile phone 10, in this embodiment of this application, neither of the center 2000 of the wireless charging transmit coil and the center 1000 of the wireless charging receive coil may be selected to be displayed on the screen of the mobile phone 10 (in this embodiment of this application, positions of the center 2000 of the wireless charging transmit coil and the center 1000 of the wireless charging receive coil are represented by using dashed-line circles as examples).

Therefore, for ease of viewing by the user, when neither of the center 1000 of the wireless charging transmit coil and the center 2000 of the wireless charging transmit coil of the charging base in FIG. 2B is displayed in a charging prompt interface, the user may determine, by viewing whether an edge of the charging alignment picture displayed on the mobile phone 10 is smoothly connected to an edge of the wireless charger, whether the mobile phone 10 and the horizontal wireless charger 20 are in a state of accurate alignment. When a distance d between the center 1000 of the wireless charging receive coil and the center 2000 of the wireless charging transmit coil of the horizontal wireless charger does not exceed a threshold, it may be considered that the mobile phone 10 and the horizontal wireless charger 20 are in the state of accurate alignment.

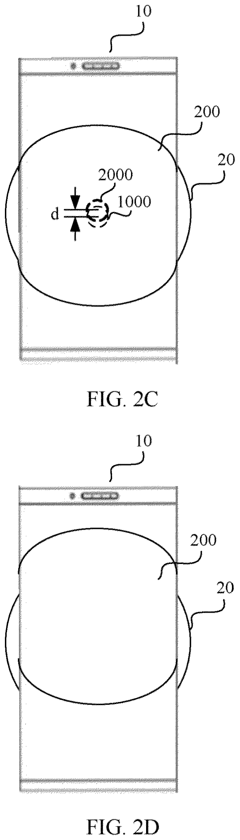

As shown in FIG. 2C, the user looks downward at the mobile phone 10 placed on the horizontal wireless charger 20, and an edge of the picture of the charging base shown in the charging alignment picture 200 is basically smoothly connected to the edge of the horizontal wireless charger 20. In this case, a distance between the center 1000 of the wireless charging receive coil and the center 2000 of the wireless charging transmit coil of the horizontal wireless charger is d. If the first threshold is 10 mm, and d shown in the figure is 5 mm, it indicates that the distance between the centers of the two coils does not exceed the first threshold, and it may be determined that the mobile phone 10 is accurately aligned with the horizontal wireless charger 20. When the mobile phone 10 and the horizontal wireless charger 20 are in the state of accurate alignment, charging efficiency of charging the electronic device by the wireless charger is relatively high.

In some other embodiments of this application, the mobile phone 10 is not in an optimal position after being placed on the wireless charger 20. As shown in FIG. 2D, the mobile phone 10 deviates from the wireless charger 20. In this case, a base edge in the charging alignment picture displayed on the display of the mobile phone 10 is not smoothly connected to the edge of the charging base of the wireless charger 20. In this case, it indicates that the mobile phone 10 is not in an optimal charging position on the horizontal wireless charger 20, and the wireless charger 20 cannot charge the mobile phone 10 or charging efficiency is relatively low.

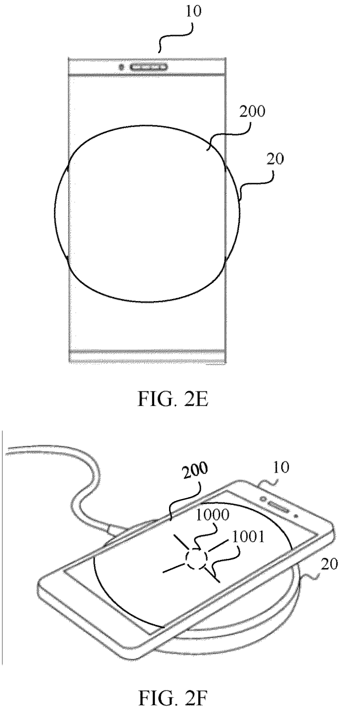

A higher degree of deviation between the edge of the charging alignment picture and the edge of the charging base of the wireless charger 20 indicates that the mobile phone 10 is farther away from the optimal charging position. Based on a prompt of the charging alignment picture, the user may move the mobile phone 10 based on the picture of the charging base of the wireless charger 20 displayed on the mobile phone 10, so that the edge of the picture of the wireless charging base displayed on the mobile phone 10 is aligned with the edge of the wireless charger 20 (as shown in FIG. 2E). In this way, alignment between the mobile phone 10 and the wireless charger 20 is completed.

According to some embodiments of this application, to help the user view the center position 1000 of the wireless charging receive coil of the electronic device, an identifier 1001 (a first identifier, which may be a cross cursor) shown in FIG. 2F may be used in the charging alignment picture displayed on the screen of the mobile phone 10 to indicate the center position 1000 of the wireless charging receive coil. In other words, a position of the identifier 1001 is the center position 1000 of the wireless charging receive coil. Certainly, another manner may alternatively be used for prompting. This is not limited in this embodiment of this application.

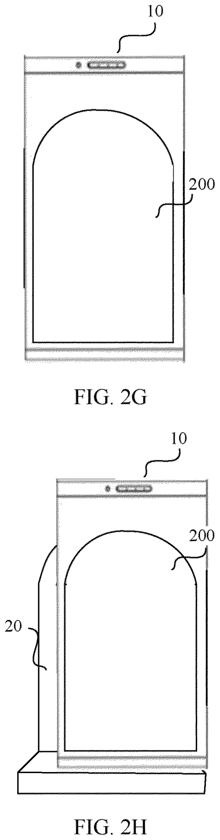

With reference to the accompanying drawings, the following describes a case in which a charging alignment picture is displayed in an electronic device for a vertical wireless charger of the type 1. As shown in FIG. 2G, a charging alignment picture is displayed on the screen of the mobile phone 10 (to clearly display the charging alignment picture, only the mobile phone 10 is shown in FIG. 2A, and a wireless charger is not shown). The picture is displayed in a form in which the user can see a base of the wireless charger through the screen of the mobile phone 10. For the vertical charger, a difference between the vertical charger and the horizontal charger lies in only types of displayed pictures.

In some other embodiments of this application, for the vertical wireless charger, when the mobile phone 10 is vertically placed on a wireless charging base of the vertical wireless charger, the mobile phone 10 displays a charging alignment picture 200 of the vertical wireless charger with a corresponding model. After the mobile phone 10 is placed on the wireless charger 20 and handshake is completed, the mobile phone 10 may not be in an optimal charging position on the wireless charger 20. As shown in FIG. 2H, the mobile phone 10 deviates from the wireless charger 20, that is, an edge of the charging alignment picture 200 of the wireless charger 20 displayed on the display of the mobile phone 10 obviously deviates from an edge of the charging base of the wireless charger 20. The wireless charger 20 cannot charge the mobile phone 10, or charging efficiency is relatively low.

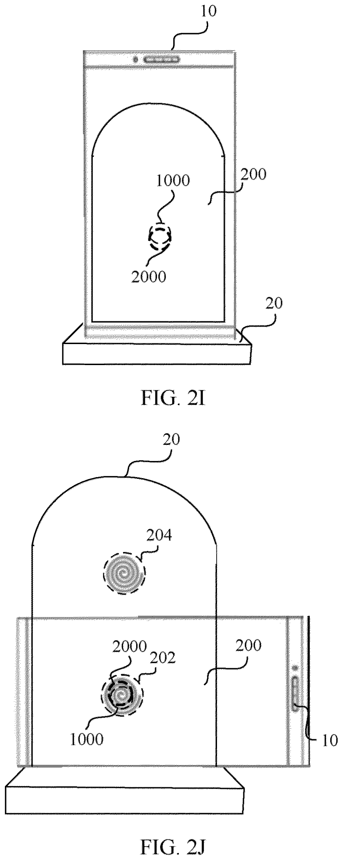

Based on a prompt of the charging alignment picture, the user may move the mobile phone 10 leftward based on the picture of the charging base of the wireless charger 20 displayed on the mobile phone 10, so that the edge of the picture of the wireless charging base displayed on the mobile phone 10 is roughly aligned with the edge of the wireless charger 20 (as shown in FIG. 2I). In this case, the mobile phone 10 is in a preferred charging position on the wireless charger. A center position 2000 of a wireless charging transmit coil 202 at a lower part of the charging base of the vertical wireless charger in the charging alignment picture 200 is very close to and partially overlaps a center position 1000 of a wireless charging receive coil of the mobile phone 10. Alignment between the mobile phone 10 and the wireless charger 20 is completed. Charging efficiency of charging the mobile phone 10 by the wireless charger 20 is relatively high.

For ease of viewing by the user, when the edge of the wireless charging base in the charging alignment picture displayed on the screen of the mobile phone 10 overlaps the edge of the wireless charger, the center position 1000 of the wireless charging receive coil 100 of the mobile phone 10 is relatively close to the center position 2000 of the wireless charging transmit coil of the vertical wireless charger. When a distance between the two centers is less than the first threshold, the mobile phone 10 is accurately aligned with the wireless charger 20. In this case, charging efficiency of charging the electronic device by the wireless charger is relatively high.

In addition, in some embodiments, for some vertical chargers, the mobile phone may be charged on the vertical charger in a vertical manner (that is, the mobile phone is placed on the charger in a manner in which a short side of the mobile phone is at the bottom) or a horizontal manner (that is, the mobile phone is placed on the charger in a state in which one of long sides of the mobile phone is at the bottom).

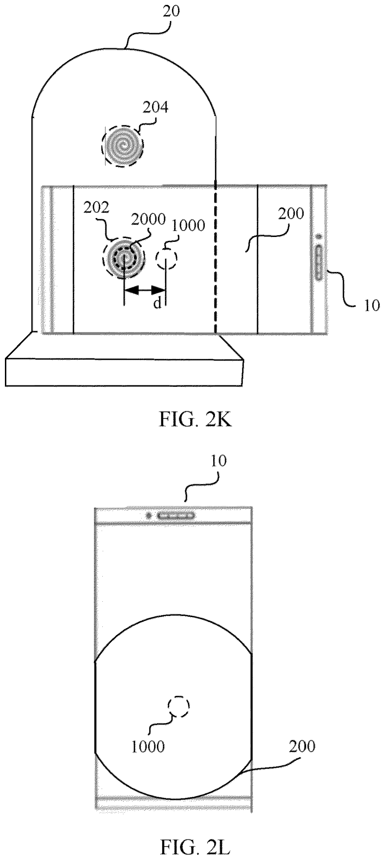

A vertical charger shown in FIG. 2J and FIG. 2K includes two wireless charging transmit coils 202 and 204 (for example, only positions of the wireless charging transmit coil 202 and the wireless charging transmit coil 204 are shown, and neither of the wireless charging transmit coil 202 and the wireless charging transmit coil 204 is presented on the screen of the mobile phone 10). The wireless charging transmit coil 202 is located at a lower part of the vertical wireless charger, and the wireless charging transmit coil 204 is located at an upper part of the vertical wireless charger, so that the user can charge the mobile phone in both a vertical manner and a horizontal manner. When the mobile phone 10 is horizontally placed on the vertical wireless charger, the mobile phone 10 detects, based on data obtained by a gyroscope on the mobile phone 10, that the mobile phone 10 is in a horizontal state, and correspondingly displays a charging alignment picture 200 on the screen in a landscape mode. The wireless charging receive coil 1000 of the mobile phone 10 overlaps a center position 2000 of the wireless charging transmit coil 202 in the charging alignment picture 200. A charging base picture of the charger obtained when the mobile phone 10 is placed in a horizontal state on the vertical charger is stored on a local server or an associated server of the mobile phone 10.

As shown in FIG. 2K, an edge of the charging base shown in the charging alignment picture 200 deviates by a relatively long distance from an edge that is of the charging base of the wireless charger 20 and that is viewed by the user. In this case, a distance d between a center position of the wireless charging transmit coil 202 of the wireless charger and either of the center position 1000 of the wireless charging receive coil of the mobile phone 10 and the center position 2000 of the wireless charging transmit coil in the charging alignment picture 200 is relatively long. This indicates that the mobile phone 10 is far away from an optimal charging position. The distance d between the center position of the wireless charging transmit coil 202 of the wireless charger and either of the center position 1000 of the wireless charging receive coil of the mobile phone 10 and the center position 1000 of the wireless charging transmit coil in the charging alignment picture exceeds the first threshold, and the mobile phone 10 and the wireless charger are not in the state of accurate alignment. For example, d is 15 mm, and the first threshold is set to 10 mm. Based on a prompt of the charging alignment picture 200 shown in FIG. 2K, the user may move the mobile phone 10 to align the edge of the charging alignment picture 200 displayed on the mobile phone 10 with the edge of the charging base of the wireless charger 20, so that the distance d between the center position of the wireless charging transmit coil 202 of the wireless charger and either of the center position 1000 of the wireless charging receive coil of the mobile phone 10 and the center position 1000 of the wireless charging transmit coil in the charging alignment picture is less than the first threshold. This implements accurate alignment between the mobile phone 10 and the wireless charger 20.

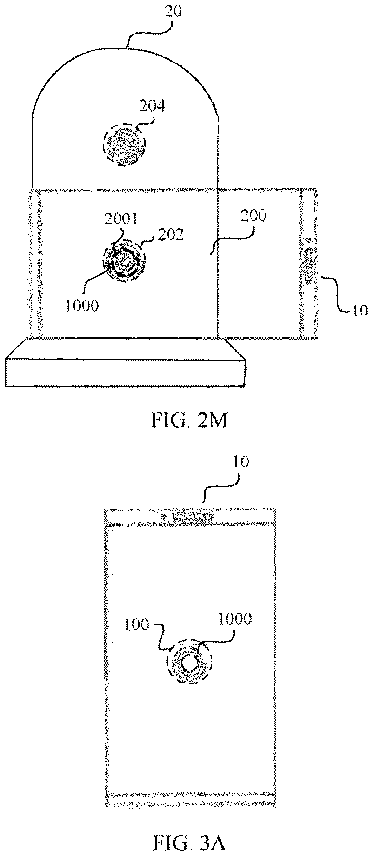

In some other embodiments of this application, a position of the wireless charging receive coil of the mobile phone 10 on the mobile phone 10 may not be a geometric center position of the mobile phone 10. A position of the charging alignment picture displayed on the mobile phone 10 changes with the center position of the wireless charging receive coil of the mobile phone 10. The charging alignment picture displayed on the mobile phone 10 is basically drawn and displayed by using the center position of the wireless charging receive coil of the mobile phone 10 as a center. As shown in FIG. 2L, when the center position 1000 of the wireless charging receive coil of the mobile phone 10 is at a lower part of the mobile phone 10, the charging alignment picture is displayed at the lower part of the electronic device (the wireless charger 20 is not displayed in FIG. 2L). As shown in FIG. 2M, when the center position 1000 of the wireless charging receive coil of the mobile phone 10 is at a lower part of the mobile phone 10, the charging alignment picture 200 displays a left part of the horizontally placed mobile phone 10 in a landscape mode. After the user aligns the edge of the base in the charging alignment picture 200 with the edge of the base of the wireless charger 20, a center position 2001 of the wireless charging transmit coil of the charging base of the wireless charger 20 in the charging alignment picture on the mobile phone 10 is also at the left part of the horizontally placed mobile phone 10.

It should be noted that after the mobile phone 10 is aligned with the wireless charger, the mobile phone 10 may store the charging alignment picture in a memory of the mobile phone 10. When the user charges the same mobile phone next time by using the wireless charger with the same model, the mobile phone 10 may directly search the memory for the charging alignment picture and display the picture on the screen of the mobile phone 10. This improves efficiency of alignment between the mobile phone 10 and the wireless charger.

With reference to the accompanying drawings, the following describes a case in which a charging alignment picture is displayed in an electronic device for a wireless charger of the type 2.

According to some example embodiments of this application, as shown in FIG. 3A, a wireless charging receive coil 100 of the mobile phone may be located in a center position of the mobile phone, and a center position 1000 of the wireless charging receive coil 100 of the mobile phone 10 is a geometric center position of the mobile phone 10.

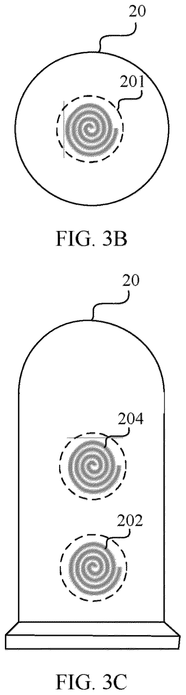

FIG. 3B shows an example of a horizontal wireless charger 20 according to this application. The horizontal wireless charger is circular, and a wireless charging transmit coil 201 of the horizontal wireless charger is located in a center position of the wireless charger. FIG. 3C shows an example of a vertical wireless charger 20 according to this application. The vertical wireless charger has two wireless charging transmit coils 202 and 204.

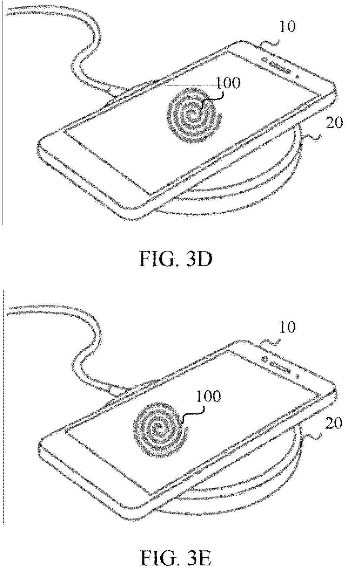

For the wireless charger of the type 2, a charging alignment picture of the wireless charger is a picture of the wireless charging receive coil 100 of the mobile phone 10. The picture shows a form of the wireless charging receive coil in the mobile phone, and identifies a position of the coil in the mobile phone (a position in which the wireless charging receive coil in the mobile phone is mapped to a screen surface of the mobile phone). As shown in FIG. 3D, when the mobile phone 10 is placed on the horizontal wireless charger 20, the mobile phone 10 cannot identify a model of the charger. Therefore, the picture of the charging receive coil 100 is displayed on the screen of the mobile phone 10. A center position of the charging receive coil of the mobile phone 10 shown in FIG. 3D is a geometric center of the mobile phone, and the user is prompted to place the wireless charging receive coil 100 of the mobile phone 10 as close as possible to a center position of the charging base of the wireless charger 20 (it is assumed that the wireless charging transmit coil of the wireless charger 20 is located in a center position of the horizontal charger), so that the wireless charging transmit coil of the wireless charger 20 and the wireless charging receive coil 100 of the mobile phone 10 are in the state of accurate alignment, thereby achieving a relatively high charging rate.

As shown in FIG. 3E, a charging prompt interface is displayed on the screen of the mobile phone 10, and the charging prompt interface shows that the wireless charging receive coil 100 is at a lower part of the screen of the mobile phone 10. The user may learn of a specific position of the wireless charging receive coil in the mobile phone 10 based on the charging prompt interface. This helps the user place the wireless charging receive coil of the mobile phone 10 in an appropriate position on the wireless charger 20, to avoid a problem that a charging rate is low and charging fails because the wireless charging receive coil of the mobile phone 10 deviates from the wireless charging transmit coil of the wireless charger 20.

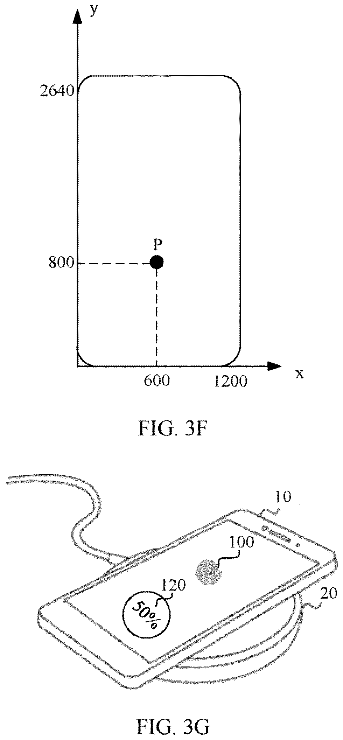

The mobile phone 10 may display, in the following manner, the picture of the wireless charging receive coil 100 on the screen surface in a position corresponding to the specific position of the wireless charging receive coil in the mobile phone. For example, when the wireless charging receive coil 100 of the mobile phone 10 is located in a lower position of the mobile phone 10, the center of the wireless charging receive coil 100 is P shown in FIG. 3F. Coordinates of P may be determined based on pixels of the mobile phone. For example, screen resolution of the mobile phone is 2640 x 1200, a direction in which a width of the mobile phone is located is the x-axis, a direction in which a height of the mobile phone is located is the y-axis, a lower left corner of the mobile phone is an origin, there are 1200 pixels in the width direction of the mobile phone, and there are 2640 pixels in the height direction of the mobile phone. In this case, coordinates of a center position of the wireless charging receive coil 100 relative to the x-axis and the y-axis are (600, 800).

It may be understood that the wireless charging receive coil 100 of the mobile phone 10 may alternatively be located in any location of the mobile phone 10. The mobile phone 10 needs only to store position data of the internal wireless charging receive coil in a memory in advance for invocation by a processor in an alignment process of the mobile phone. The wireless charging transmit coil of the charging base of the wireless charger may also be in any position of the wireless charger 20. If the wireless charger is a wireless charger that is of the type 1 and that has a known model, a specific position or a center position of the wireless charging transmit coil may be identified in a prestored charging alignment picture. In addition, if the charging alignment picture displayed in the charging prompt interface includes the position of the wireless charging transmit coil, the position should be displayed in a position in which the wireless charging receive coil in the mobile phone is mapped to the screen surface, so that the user can move the mobile phone or the wireless charger based on the prompt of the charging alignment picture, to enable the wireless charging receive coil in the mobile phone and the wireless charging transmit coil in the wireless charger to be in the state of accurate alignment.

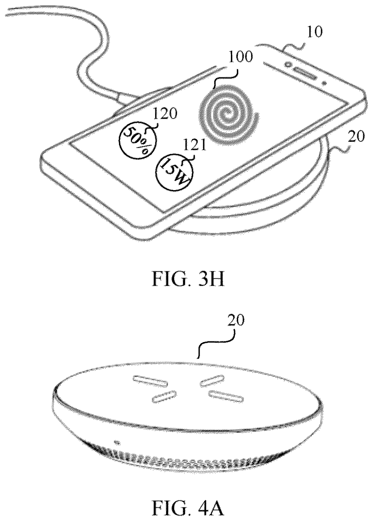

In some embodiments of this application, the charging prompt interface may further display information such as a charging status, a battery level, and a charging rate. A type of the information displayed in the charging prompt interface is not limited in this embodiment of this application. For example, as shown in FIG. 3G, the charging prompt interface of the electronic device displays not only the wireless charging receive coil 100, but also a charging icon 120 of the battery level of the electronic device (for example, a current battery level is 50% in the figure). In addition, for example, as shown in FIG. 3H, a charging rate 121 of the electronic device may further be displayed (for example, a charging power is 15W in the figure). It should be noted that the user may further determine, based on a value of the charging rate 121 displayed on the electronic device, whether the electronic device is well aligned with the wireless charger. For example, a maximum charging rate of the wireless charger is 17W, and a minimum preset value of the charging rate when the wireless charger is well aligned with the electronic device is 13W. In this case, the charging rate 121 displayed on the screen of the electronic device is 15W. 15W is greater than the preset value 13W. This indicates that the electronic device is well aligned with the wireless charger in this case.

In addition, the mobile phone 10 may further periodically feed back received energy to the wireless charger to indicate whether there is a foreign matter between the mobile phone 10 and the wireless charger. The mobile phone 10 also periodically sends a control error to the wireless charger, so that the wireless charger adjusts a to-be-sent power signal to a target value. In other words, when there is a foreign matter between the mobile phone 10 and the wireless charger, energy emitted by the wireless charger is received by both the mobile phone 10 and the foreign matter. This reduces energy received by the mobile phone 10. When a difference between the energy emitted the wireless charger and the energy received by the mobile phone 10 reaches a specific value, it is considered that there is a foreign matter between the mobile phone and the wireless charger. The specific value may be determined according to actual experience, for example, may be 0.5W. This is not limited in this embodiment of this application.

The target value is a target receive power value that is determined by the mobile phone according to a requirement of the mobile phone after the mobile phone identifies the wireless charger. The target receive power value of the mobile phone 10 is set based on a type of the wireless charger at a transmit end, a temperature of a battery of the mobile phone 10, and the like. For example, a charging capability (maximum transmit power) of the wireless charger is 40W, and a current temperature of the battery of the mobile phone 10 is 25 degrees (usually, a proper temperature of the mobile phone 10 is between 10 degrees and 45 degrees). In this case, a target receive power of the mobile phone 10 may be set to 40W. Certainly, the target receive power of the mobile phone 10 may alternatively be less than the charging capability of the wireless charger. This is not limited in this embodiment of this application.

The control error is a difference between an actual receive power value of the mobile phone 10 and the target receive power value. If the control error fed back by the mobile phone 10 to the wireless charger is a negative value (that is, the actual receive power value is less than the target receive power value), the wireless charger needs to increase the transmit power. If the control error fed back by the mobile phone 10 to the wireless charger is a positive value (that is, the actual receive power value is greater than the target receive power value), the wireless charger needs to reduce the transmit power.

Therefore, the charging alignment picture is displayed on the screen of the electronic device. Compared with a solution in which only the charging icon 120 (showing a battery level) shown in FIG. 3H is displayed on the electronic device, the technical solution provided in this application can prompt the user to adjust a position of the electronic device on the wireless charging base of the wireless charger. When the wireless charging base is not accurately aligned with the electronic device, the user is instructed to place the electronic device in a preferred charging position on the charging base of the wireless charger, so that the distance between the center position of the wireless charging receive coil of the electronic device and the center position of the wireless charging transmit coil of the wireless charger is less than the first threshold. In this way, accurate alignment between the electronic device and the wireless charging base of the wireless charger is implemented, and a charging rate of the wireless charger for the electronic device is improved.

For a vertical charger of the type 2, a display manner of a charging alignment picture is completely the same as that in the case of the horizontal charger. Therefore, details are not described again.

The following describes a structure of the wireless charger and a structure of the electronic device that implement wireless charging alignment detection in the foregoing embodiments of this application.

First, the wireless charger 20 according to embodiments of this application is described with reference to the accompanying drawings.

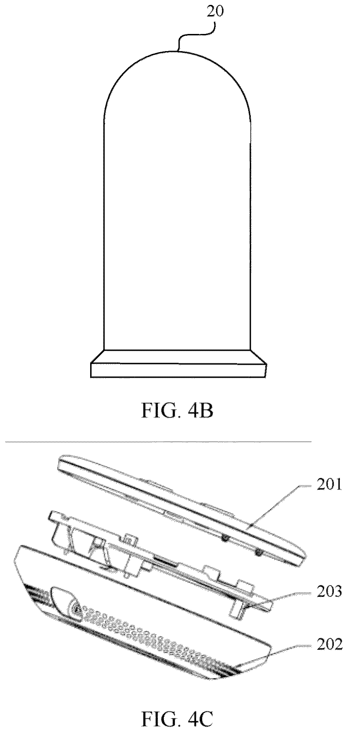

FIG. 4A and FIG. 4B each are a schematic outline diagram of a wireless charger in a wireless charging alignment detection method according to an embodiment of this application. A wireless charger 20 shown in FIG. 4A is a horizontal wireless charger, and a wireless charger 20 shown in FIG. 4B is a vertical wireless charger. That the wireless charger 20 is a horizontal charger is used as an example. As shown in FIG. 4C, the wireless charger 20 includes an upper cover 201, a lower cover 202, and a wireless charging base body 203. The upper cover 201 and the lower cover 202 are used to fasten the wireless charging base body 203. A heat dissipation hole and a heat dissipation fan are disposed on the lower cover 202 to dissipate heat for the wireless charger 20.

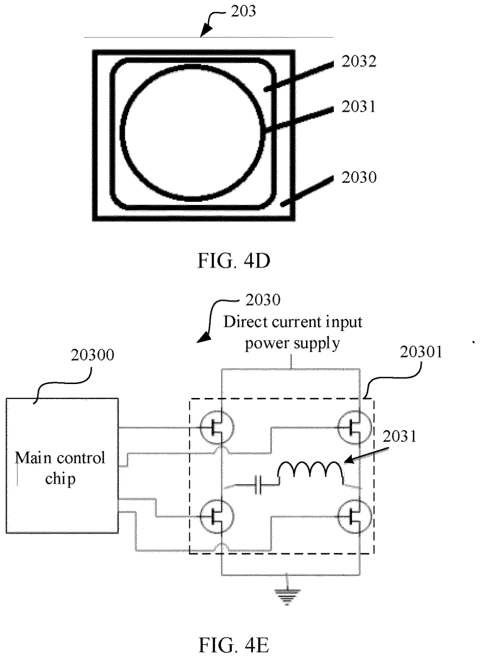

As shown in FIG. 4D, the wireless charging base body 203 includes but is not limited to a main control circuit 2030, a wireless charging transmit coil 2031, and a magnetic shielding sheet 2032. The magnetic shielding sheet 2032 is fastened on the back of the wireless charging transmit coil 2031, to improve electromagnetic conversion efficiency.

As shown in FIG. 4E, the main control circuit 2030 includes but is not limited to a main control chip 20300 and a full-bridge inverter 20301. A current that is output by a power supply (which may be a direct current power supply) of the wireless charger 20 is converted into an alternating current transmit signal through the full-bridge inverter 20301 under control of the main control chip 20300. The wireless charging transmit coil 2031 transmits the alternating current transmit signal to the mobile phone 10 through electromagnetic coupling. The wireless charging base body 203 sends a communication signal (which is used as a first communication signal) to the mobile phone 10 by changing an inverting frequency. The first communication signal may be a sounding signal, and the sounding signal may be a PING signal. In this embodiment of this application, the wireless charging transmit coil 2031 of the wireless charging base body 203 can send, at a transmit frequency between 100 kHz and 205 kHz, a PING signal used as a sounding signal (this may be periodic transmission), to detect whether an electronic device is placed on the wireless charging base body 203 and perform handshake with the mobile phone 10. When the wireless charging receive coil 100 of the mobile phone 10 receives the PING signal sent by the wireless charging transmit coil 2031, in response, the mobile phone 10 returns a signal strength packet (which is used as a response signal) to the wireless charger 20. The signal strength packet includes information such as signal strength of the PING signal received by the electronic device from the wireless charger, and is used to indicate that the electronic device is placed on the wireless charging base body 203.

Detecting, by using the PING signal, whether an electronic device is placed on the wireless charging base body 203 is specifically as follows: The PING signal has a specific transmit power, and after receiving the PING signal, the electronic device serving as a receive end senses a voltage signal with a corresponding amplitude. The electronic device serving as the receive end compares the amplitude of the voltage signal corresponding to the PING signal with a maximum voltage of the electronic device and multiplies a comparison result by a correlation coefficient (the correlation coefficient may be 256), to obtain signal strength Q of the electronic device relative to the wireless charger. A calculation formula is specifically as follows:

$$Q = \frac{U}{U_{\max}} * E$$

Herein, $U$ is the amplitude of the voltage signal corresponding to the PING signal, $U_{\max}$ is the maximum charging voltage of the electronic device, and E is the correlation coefficient and may be 256.

After obtaining the signal strength Q, the electronic device feeds back the signal strength Q to the wireless charger according to the Qi protocol. After receiving the signal strength Q, the wireless charger determines that the electronic device is placed on the wireless charger. If the wireless charger receives no signal strength Q, the wireless charger determines that no electronic device is placed on the wireless charger.

Qi is a "wireless charging" standard developed by the Wireless Power Consortium (Wireless Power Consortium, WPC), which is the first standardization organization that promotes a wireless charging technology in the world. In the Qi standard, the PING signal is a signal sent by a transmit end once every 500 milliseconds. Usually, duration for sending the PING signal by the transmit end each time is 90 milliseconds. A transmit frequency of the PING signal is usually between 100 kHz and 205 kHz. After the receive end receives the PING signal, the receive end may feed back the response signal to the transmit end in response to the PING signal, to confirm that a connection between the receive end and the transmit end is established, that is, handshake between the receive end and the transmit end is completed. After receiving the response signal, the transmit end may stop sending of the PING signal, and send a power signal, so that the receive end implements functions such as charging. According to some embodiments of this application, the transmit end may be the wireless charger 20, and the receive end may be the mobile phone 10.

The mobile phone 10 continues to send an identification packet and a configuration packet to the wireless charger 20. The identification packet includes information such as a vendor code, a device identifier, and a model of the mobile phone 10, and is used to identify the model, an identity, and the like of the mobile phone 10. The configuration packet includes information such as a maximum receive power of the mobile phone 10. Therefore, the wireless charger 20 determines the maximum receive power of the mobile phone 10.

After the wireless charger 20 and the mobile phone 10 complete identity authentication, the wireless charger 20 sends, to the mobile phone 10 according to a private protocol, a communication signal (which is used as a second communication signal) that includes information such as a model and a maximum output power of the wireless charger 20.

In other words, the mobile phone 10 sends the private protocol to the wireless charger 20. If the wireless charger 20 responds to the private protocol, the wireless charger 20 sends, to the mobile phone 10, the communication signal (which is used as the second communication signal) that includes the information such as the model and the maximum output power of the wireless charger 20. After receiving the second communication signal, the mobile phone 10 searches, based on the model of the wireless charger 20 included in the second communication signal, the memory to determine whether a charging base picture of the wireless charger 20 is stored in the memory. If the charging base picture of the wireless charger 20 is stored in the memory, the charging base picture is displayed on the display of the mobile phone 10. If the mobile phone 10 cannot find a charging base picture of the wireless charger 20 from the memory based on the model of the wireless charger 20 included in the second communication signal, the mobile phone 10 finds a picture of the wireless charging receive coil of the mobile phone 10 from the memory, and displays the picture on the display of the mobile phone 10.

The private protocol may be a communication packet customized by a vendor in a specified field of the Qi standard protocol based on the standard Qi protocol. The customized communication packet refers to a model of a wireless charger defined in a specified field 0x18 of the Qi standard protocol. For example, when a packet header specified in the standard Qi protocol is 01, a field represented by 01 is a signal strength packet; or when a packet header specified in the standard Qi protocol is 0x18, a field represented by 0x18 is a dedicated data packet, and the dedicated data packet may include the model of the wireless charger 20.

If the wireless charger 20 does not respond to the private protocol, the wireless charger 20 transmits energy (a power signal) to the mobile phone 10 according to a preset configuration, to charge the mobile phone 10. The mobile phone 10 may further determine a transmit power of the wireless charger 20 based on the energy transmitted by the wireless charger 20 to the mobile phone 10. The preset configuration refers to a standard charging power defined in the Qi protocol. The standard charging power may be a maximum charging power (maximum transmit power) of the wireless charger 20.

Next, the mobile phone 10 according to embodiments of this application is described with reference to the accompanying drawings.

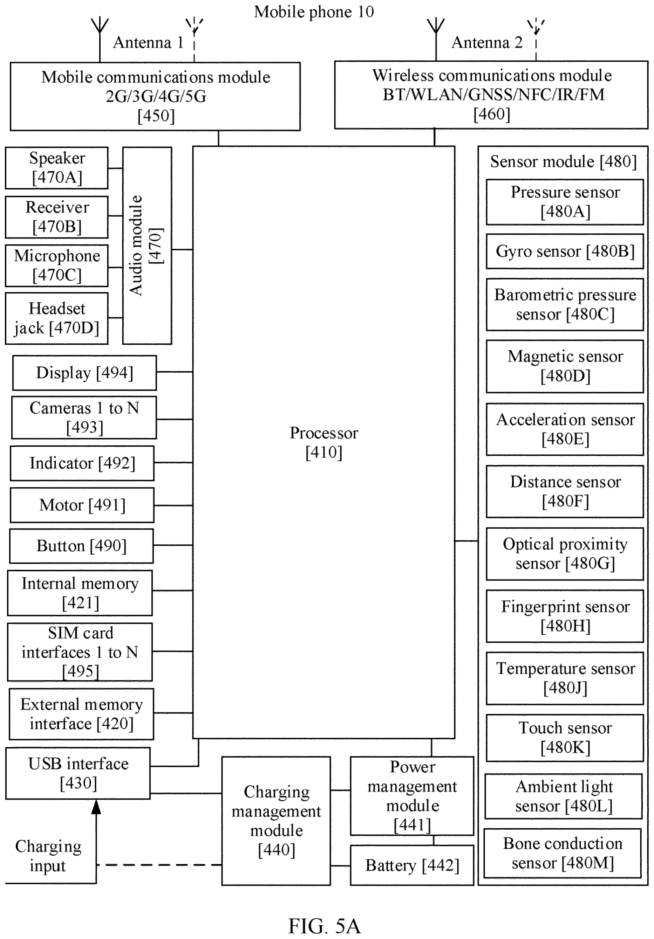

FIG. 5A is a schematic diagram of a structure of the mobile phone 10 according to an embodiment of this application. As shown in FIG. 5A, the mobile phone 10 may include a processor 410, an external memory interface 420, an internal memory 421, a universal serial bus (universal serial bus, USB) interface 430, a charging management module 440, a power management module 441, a battery 442, an antenna 1, an antenna 2, a mobile communications module 450, a wireless communications module 460, an audio module 470, a speaker 470A, a receiver 470B, a microphone 470C, a headset jack 470D, a sensor module 480, a button 490, a motor 491, an indicator 492, a camera 493, a display 494, a subscriber identification module (subscriber identification module, SIM) card interface 495, and the like. The sensor module 480 may include a pressure sensor 480A, a gyro sensor 480B, a barometric pressure sensor 480C, a magnetic sensor 480D, an acceleration sensor 480E, a distance sensor 480F, an optical proximity sensor 480G, a fingerprint sensor 480H, a temperature sensor 480J, a touch sensor 480K, an ambient light sensor 480L, a bone conduction sensor 480M, and the like.

It may be understood that the structure shown in this embodiment does not constitute a specific limitation on the mobile phone 10. In some other embodiments, the mobile phone 10 may include more or fewer components than those shown in the figure, or combine some components, or split some components, or have different component arrangements. The components shown in the figure may be implemented by hardware, software, or a combination of software and hardware.

The processor 410 may include one or more processing units. For example, the processor 410 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the mobile phone 10. The controller may generate an operation control signal based on instruction operation code and a time sequence signal, to complete control of instruction fetching and instruction execution.

A memory may further be disposed in the processor 410, to store instructions and data. In some embodiments, the memory in the processor 410 is a cache. The memory may store instructions or data just used or cyclically used by the processor 410. If the processor 410 needs to use the instructions or data again, the instructions or data may be directly invoked from the memory. This avoids repeated access, and reduces waiting time of the processor 410, so that system efficiency is improved.

In some embodiments, the processor 410 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that the interface connection relationship between the modules shown in this embodiment is merely an example, and does not constitute a limitation on the structure of the mobile phone 10. In some other embodiments, the mobile phone 10 may alternatively use an interface connection manner that is different from the manner in the foregoing embodiment, or a combination of a plurality of interface connection manners.

A wireless communication function of the mobile phone 10 may be implemented by using the antenna 1, the antenna 2, the mobile communications module 450, the wireless communications module 460, the modem processor, the baseband processor, and the like.

The antenna 1 and the antenna 2 are configured to transmit and receive electromagnetic wave signals. Each antenna in the mobile phone 10 may be configured to cover one or more communication bands. Different antennas may be multiplexed to improve antenna utilization. For example, the antenna 1 may be multiplexed into a diversity antenna of a wireless local area network. In some other embodiments, the antenna may be used in combination with a tuning switch.

The wireless communications module 460 may provide a solution for wireless communication that is applied to the mobile phone 10 and that includes a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communications module 460 may be one or more components that integrate at least one communications processing module. The wireless communications module 460 receives an electromagnetic wave through the antenna 2, performs frequency modulation and filtering on an electromagnetic wave signal, and sends a processed signal to the processor 410. The wireless communications module 460 may further receive a to-be-sent signal from the processor 410, perform frequency modulation and amplification on the to-be-sent signal, and convert the to-be-sent signal into an electromagnetic wave for radiation through the antenna 2.

In some embodiments, in the mobile phone 10, the antenna 1 is coupled to the mobile communications module 450, and the antenna 2 is coupled to the wireless communications module 460, so that the mobile phone 10 can communicate with a network and another device according to a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The mobile phone 10 implements a display function by using the GPU, the display 494, the application processor, and the like. The GPU is a microprocessor for image processing, and is connected to the display 494 and the application processor. The GPU is configured to perform mathematical and geometric calculation and render graphics. The processor 410 may include one or more GPUs that execute program instructions to generate or change display information.

The display 494 is configured to display an image, a video, and the like. The image includes but is not limited to a charging alignment picture, a picture of a wireless charging receive coil of the mobile phone 10, and at least one of parameters such as a charging status, a battery level, and a charging rate.

The display 494 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like.

The mobile phone 10 may implement a photographing function by using the ISP, the camera 493, the video codec, the GPU, the display 494, the application processor, and the like.

The internal memory 421 may be configured to store computer executable program code, where the executable program code includes instructions. The processor 410 perform various function applications and data processing of the mobile phone 10 by running the instructions stored in the internal memory 421. For example, in this embodiment of this application, the processor 410 may respond to a touch event of a user on the display 494 by executing the instructions stored in the internal memory 421. The internal memory 421 may include a program storage area and a data storage area. The program storage area may store an operating system, an application program required by at least one function (for example, a sound play function or an image play function), and the like. The data storage area may store data (such as audio data or a phone book) created in a use process of the mobile phone 10. In addition, the internal memory 421 may include a high-speed random access memory, and may further include a non-volatile memory, such as at least one magnetic disk storage component, a flash memory component, and a universal flash storage (universal flash storage, UFS).

According to some embodiments of this application, content stored in the internal memory 421 is not limited. For example, the internal memory 421 may be configured to pre-store a charging alignment picture, including at least one of a charging base picture of a wireless charger of each model (a picture in which a wireless charging transmit coil is identified or is not identified), a picture of a wireless charging receive coil of the mobile phone 10, and screen resolution of the mobile phone 10.

The gyro sensor 480B may be configured to determine a motion gesture of the mobile phone 10. In some embodiments, angular velocities of the mobile phone 10 around the three axes (that is, the x-axis, the y-axis, and the z-axis) may be determined by using the gyro sensor 480B. The gyro sensor 480B obtains posture data of the mobile phone 10 in real time, and reports the posture data to the processor 410. The processor 410 determines, based on the posture data, that the mobile phone 10 is currently in a placement state such as horizontal lying, horizontal standing, or vertical standing, and chooses, based on the determined placement state of the mobile phone, how to display a charging alignment picture. For example, when the mobile phone 10 is placed horizontally on a vertical wireless charger, the processor 410 detects, based on the posture data obtained by the gyro sensor 480B, that the mobile phone 10 is in a horizontally placed state, and correspondingly, a charging alignment picture 200 is displayed on a screen in a landscape mode, as shown in FIG. 2K.

In some embodiments of this application, the mobile phone 10 may further include a wireless charging receive coil (a wireless charging receive end), configured to receive wireless charging input energy. The wireless charging input energy received by the wireless charging receive coil is managed by the charging management module 440, and the input energy is used to charge the battery 442. The wireless charging receive coil may be further configured to receive a first communication signal and a second communication signal that are sent by the wireless charger 20.

The power management module 441 is configured to connect the battery 442, the charging management module 440, and the processor 410. The power management module 441 receives input of the battery 442 and/or the charging management module 440, and supplies power to the processor 410, the internal memory 421, the display 494, the camera 493, the wireless communications module 460, and the like. The power management module 441 may be further configured to: monitor parameters such as a battery capacity, a battery cycle count, and a battery health status (leakage and impedance), and report the foregoing parameters to the processor 410. The display 494 displays the parameters in a charging prompt interface, as shown in FIG. 3G.

According to some embodiments of this application, the processor may further determine a position relationship between the wireless charging receive coil of the mobile phone 10 and the wireless charging transmit coil of the wireless charger 20 based on signal strength returned by the mobile phone 10 for the first communication signal and a power signal sent by the wireless charger 20 to the mobile phone 10. The position relationship between the wireless charging receive coil of the mobile phone 10 and the wireless charging transmit coil of the wireless charger 20 may include accurate alignment or inaccurate alignment (deviation) between the wireless charging receive coil of the mobile phone 10 and the wireless charging transmit coil of the wireless charger 20.

The following describes a software system of the mobile phone 10 that implements the foregoing wireless charging alignment detection method in this application.

The software system of the mobile phone 10 may use a layered architecture, an event-driven architecture, a microkernel architecture, a micro-service architecture, or a cloud architecture. In embodiments of this application, an Android system with a layered architecture is used as an example to describe the software structure of the mobile phone 10.

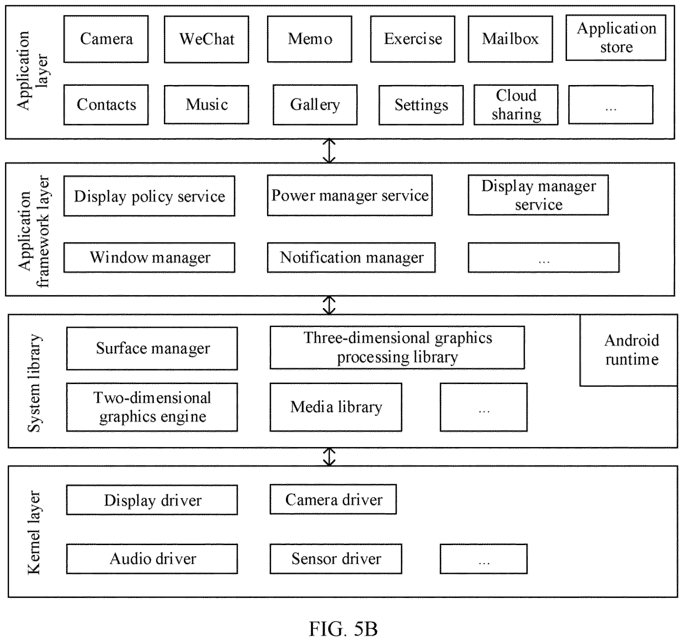

FIG. 5B is a block diagram of an example software structure of the mobile phone 10.

The layered architecture divides software into several layers, and each layer has a clear role and task. The layers communicate with each other through an software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 5B, the application packages may include applications such as Camera, Exercise, Gallery, Application store, Contacts, Mailbox, Cloud sharing, Memo, Settings, Music, and Messages.

The application framework layer provides an application programming interface (application programming interface, API) and a programming framework for applications at the application layer. The application framework layer includes some predefined functions.

As shown in FIG. 5B, the application framework layer may include a display policy service, a power manager service (power manager service, PMS), and a display manager service (display manager service, DMS). Certainly, the application framework layer may further include an activity manager service (activity manager service, AMS), a window manager service (window manager service, WMS), an input manager service (Input Manager Service, IMS), a content provider, a view system, a phone manager, a resource manager, a notification manager, and the like. This is not limited in this embodiment of this application.

The content provider is configured to store and obtain data and make the data accessible to the application. The data may include a video, an image (for example, a charging alignment picture such as a picture of a wireless charging base of a wireless charger or a picture of a wireless charging receive coil of the mobile phone 10), audio, calls that are made and received, a browse history and a bookmark, a phone book, and the like.

The display policy service may be used to obtain, from the content provider, provided data such as an image, a charging status, and a battery level, and send the data to the WMS. The WMS displays the data on the display of the mobile phone 10.

The WMS is used to manage a window program. The window manager service may obtain a screen size of the display of the mobile phone 10, and display, on the display in a portrait mode or a landscape mode based on a placement status of the mobile phone 10, a window of a charging prompt interface such as the picture of the wireless charging base of the wireless charger or the wireless charging receive coil of the mobile phone 10.

The window manager service WMS at the application framework layer draws a window according to settings of the AMS, and then sends window data to a display driver at the kernel layer. The display driver displays a corresponding interface on the display.

The IMS is used to sense a touch event, obtain coordinates at a touch position on the screen, and the like.

The view system includes visual controls, such as a text display control, a picture display control, and the like. The view system may be configured to construct an application. A display interface may include one or more views. For example, a lock-screen interface including a music application icon may include a text display view and a picture display view.

The phone manager is configured to provide a communication function of the mobile phone 10, for example, call status management (including accepting and declining).

The resource manager provides various resources for the application, such as a localized string, an icon, a picture, a layout file, and a video file.

The notification manager enables the application to display notification information in a status bar or in a system lock-screen interface. The notification manager may alternatively be a notification that appears in a form of a graph or a scroll bar text in a status bar at the top of the system, for example, a notification of an application running in the background, or may be a notification that appears in a form of a dialog window on a screen. For example, the status bar shows text information, a prompt tone is made, the mobile phone vibrates, and an indicator flickers.

The Android runtime includes a core library and a virtual machine. The Android runtime is responsible for scheduling and management of the Android system.

The core library includes two parts: a function that needs to be invoked by using the Java language, and a core library of Android.

The application layer and the application framework layer run in the virtual machine. The virtual machine executes a binary file of a Java file at the application layer and the application framework layer. The virtual machine is configured to perform functions such as object lifecycle management, stack management, thread management, security and abnormity management, and garbage collection.

The system library may include a plurality of function modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer may include at least the display driver, an input/output device driver (for example, a keyboard, a touchscreen, a headset, a speaker, or a microphone), a camera driver, an audio driver, a sensor driver, and the like. This is not limited in this embodiment of this application.

The mobile phone 10 may be a bezel-less mobile phone, a mobile phone whose front surface is provided with a screen and a physical button independent of the screen, or the like. In this embodiment of this application, none of a form, a function, and the like of the mobile phone is limited.

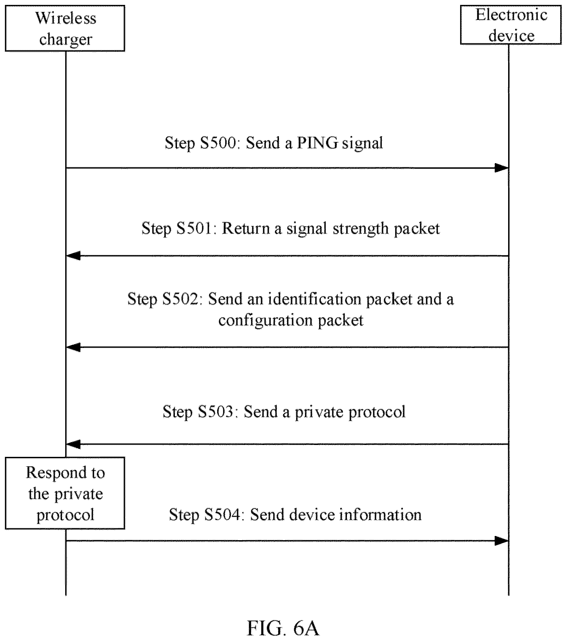

The following describes an example wireless charging alignment detection method according to an embodiment of this application. When an electronic device is placed on a wireless charger, the electronic device establishes a wireless communication connection to the wireless charger. For a specific process, refer to a communication time sequence diagram shown in FIG. 6A.

That the electronic device establishes the wireless communication connection to the wireless charger includes at least the following steps S500 to S504.

Step S500: The wireless charger sends a PING signal to the electronic device. As a transmit end, the wireless charger may periodically send the PING signal, for example, send the signal once every 500 milliseconds. Usually, duration for sending the PING signal by the transmit end each time is 90 milliseconds. A transmit frequency of the PING signal is usually between 100 kHz and 205 kHz.

Step S501: The electronic device returns a signal strength packet to the wireless charger after receiving the PING signal. The electronic device serves as a receive end, and in response to the received PING signal, the receive end returns the signal strength packet to the wireless charger. The signal strength packet is used to indicate, to the wireless charger, that a receive end is placed on a charging base of the wireless charger. The signal strength packet includes information such as signal strength of the PING signal received by the electronic device.

Step S502: After the electronic device returns the signal strength packet and the wireless charger receives the signal strength packet, the electronic device continues to send an identification packet and a configuration packet of the electronic device to the wireless charger. The identification packet includes information such as a vendor code, a device identifier, and a model of the electronic device, and is used to identify the model, an identity, and the like of the electronic device. The configuration packet includes information such as a maximum receive power of the electronic device. According to the received configuration packet, the wireless charger may determine the maximum receive power of the electronic device.

Step S503: The electronic device sends a private protocol to the wireless charger. If the wireless charger responds to the private protocol, step S504 is performed. If the wireless charger does not respond to the private protocol, the wireless charger charges the electronic device in an original manner. The "original manner" herein means that after the electronic device is placed on the wireless charger for charging, a display of the electronic device displays only a charging icon, including a status icon of "charging", a current battery level, and the like.

Step S504: In response to the private protocol sent by the electronic device, the wireless charger sends device information data to the electronic device. The device information data includes but is not limited to information such as a model and a maximum output power of the wireless charger.

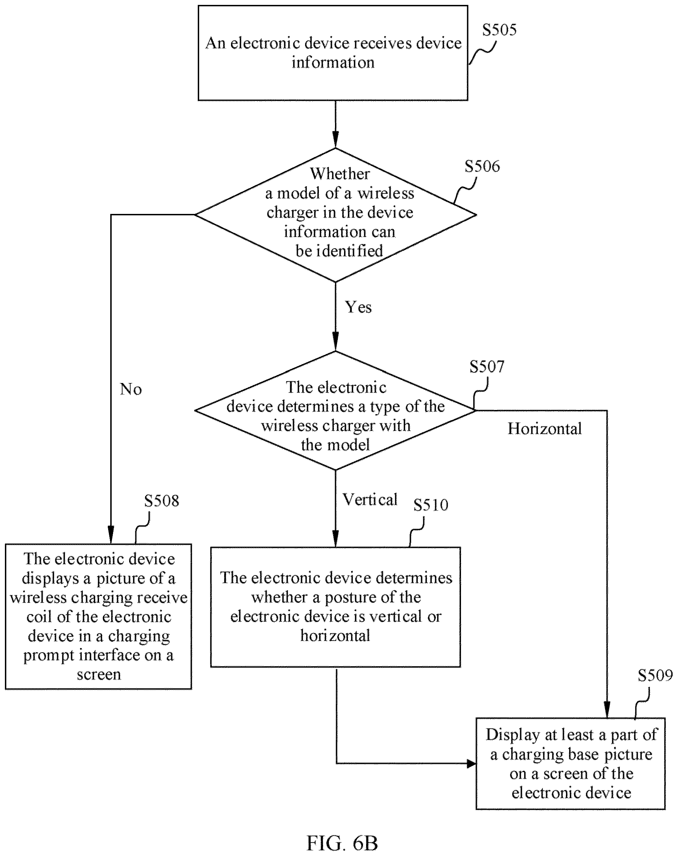

After the electronic device establishes the wireless communication connection to the wireless charger, the electronic device displays a charging prompt interface based on the received device information data and the like. FIG. 6B is a schematic flowchart of a specific implementation in which the electronic device displays the charging prompt interface according to an embodiment of this application.

Step S505: The electronic device receives the device information data. Specifically, the electronic device receives the device information data sent by the wireless charger. The device information data includes but is not limited to the information such as the model and the maximum output power of the wireless charger.

Step S506: The electronic device identifies the model of the wireless charger in the device information. Specifically, the electronic device searches, based on the received model of the wireless charger, a memory of the electronic device to determine whether the memory pre-stores a charging base picture of the wireless charger with the corresponding model. If the electronic device can find the charging base picture of the wireless charger with the model, step S507 is performed, and after a type of the wireless charger (and a posture of the electronic device) is determined, at least a part of the charging base picture is determined as a charging alignment picture and displayed in the charging prompt interface. If the charging base picture of the wireless charger with the model is not found, step S508 is performed, and a picture of a wireless charging receive coil of the electronic device is determined as a charging alignment picture and displayed in the charging prompt interface. In another implementation of this application, when the charging base picture of the wireless charger with the model is not found after the memory of the electronic device is searched, the electronic device may further search a cloud database for the charging base picture of the wireless charger with the model. Alternatively, the electronic device may directly search a cloud database for the charging base picture of the wireless charger with the model without searching the electronic device.

Step S507: The electronic device determines the type of the wireless charger with the model, where the type of the wireless charger may be a horizontal wireless charger or a vertical wireless charger. If the wireless charger is the horizontal wireless charger, step S509 is performed. If the wireless charger is the vertical wireless charger, step S510 is performed. Specifically, the electronic device may determine, based on the received model of the wireless charger, whether the wireless charger is the vertical wireless charger. If a wireless charger name corresponding to the model includes "vertical", it is determined that the wireless charger is the vertical wireless charger; or if a wireless charger name corresponding to the model does not include "vertical", it is determined that the wireless charger is the horizontal wireless charger.

Step S508: The electronic device displays the picture of the wireless charging receive coil of the electronic device in the charging prompt interface on a screen. A center position of the picture of the wireless charging receive coil overlaps a center position of the wireless charging receive coil of the electronic device. Specifically, a processor may adjust coordinates of the center position of the picture of the wireless charging receive coil to a position that is on a screen surface and that corresponds to the center position of the wireless charging receive coil disposed in the electronic device. In other words, for a wireless charger whose model is not identified, the picture of the wireless charging receive coil of the electronic device may be used as the charging alignment picture. For example, the picture of the wireless charging receive coil may be the picture of the wireless charging receive coil 100 shown in FIG. 3D or FIG. 3E in the foregoing embodiment.

The charging prompt interface may not only display the charging alignment picture, but also display information such as a charging status, a battery level, and a charging rate, for example, the charging icon 120 indicating the battery level of the electronic device in FIG. 3G. A type of the information displayed in the charging prompt interface is not limited in this embodiment of this application.

Step S509: For the horizontal wireless charger, display at least a part of the charging base picture on the screen of the electronic device. The at least a part of the charging base picture may be used as the charging alignment picture, as shown in FIG. 2A and FIG. 2B in the foregoing embodiment.

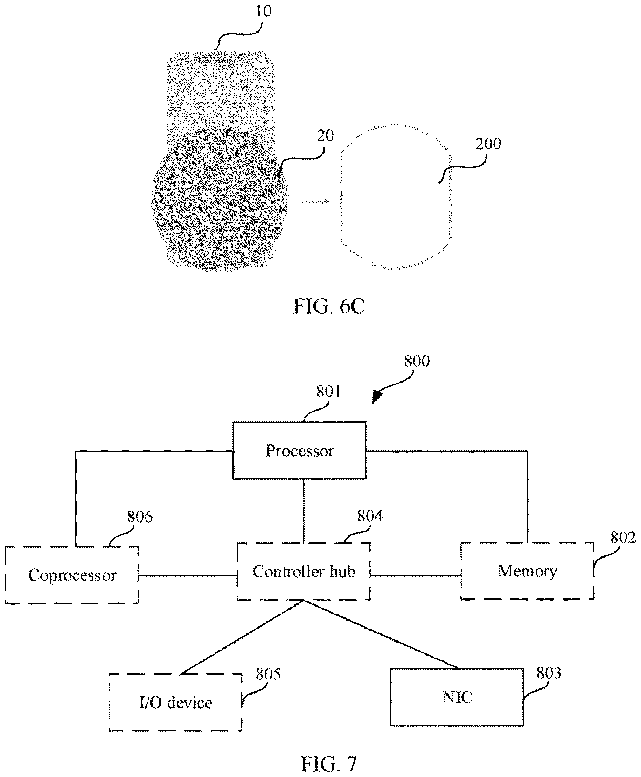

When the electronic device displays the charging base picture of the horizontal charger on the display, the processor may first read, from the internal memory, information such as the charging base picture of the wireless charger with the corresponding model, screen resolution of the electronic device, and the coordinates of the center position of the wireless charging receive coil. The coordinates of the center position of the wireless charging receive coil are position coordinates of the center of the wireless charging receive coil on the screen surface of the electronic device. The position coordinates are determined based on pixels of the screen of the electronic device, and are stored in the internal memory in advance. Then, the processor draws a geometric center of a wireless charging transmit coil in the charging base picture in the center position of the wireless charging receive coil based on the screen resolution of the electronic device and the coordinates of the center position of the wireless charging receive coil. For a manner of obtaining the coordinates of the center position of the wireless charging receive coil, refer to a part in the embodiment corresponding to FIG. 3F. The processor calculates an overlapping part between the screen of the electronic device and the charging base picture. Specifically, an intersection between the charging base picture and the screen of the electronic device is calculated to obtain coordinates of the intersection, and then a graphic of the overlapping part is obtained by connecting edge coordinates in the coordinates of the intersection. The processor saves the graphic of the overlapping part as a graphics buffer area, and sends the graphics buffer area to a graphics display system of the electronic device. The graphics buffer area is placed in a hardware buffer frame/area after being processed. The hardware buffer frame/area is an area in mobile phone memory. Content displayed on the screen is read from the hardware buffer frame. A rough process is that starting from a start address of the buffer area, the entire buffer area is scanned from top to bottom and from left to right, and the content is mapped to the screen. In this way, the charging alignment picture can be displayed on the screen of the electronic device. As shown in FIG. 6C, the overlapping part between the screen of the electronic device and the charging base picture is a charging alignment picture 200.

Step S510: For the vertical wireless charger, the electronic device determines whether a posture of the electronic device is vertical or horizontal. For vertical placement and horizontal placement, charging alignment pictures are correspondingly displayed on the screen of the electronic device. For the charging alignment pictures of the electronic device during vertical placement and horizontal placement, refer to the descriptions in FIG. 2G to FIG. 2K in the foregoing embodiment.

For example, in some embodiments of this application, whether the posture of the electronic device is vertical or horizontal may be determined by using an acceleration sensor. Details are as follows:

After detecting the PING signal sent by the wireless charger, the electronic device obtains output data of the acceleration sensor.

It is assumed that the output data of the acceleration sensor in a three-dimensional coordinate system is x, y, and z.

A pitch value and a roll value are calculated by using the output data x, y, and z. The pitch value refers to a pitch angle formed by rotating the electronic device around the x-axis, and the roll value refers to a roll angle formed by rotating the electronic device around the z-axis.

$$pitch = -asin(y/sqrt(x^2 + y^2 + z^2))/pi * 180$$

$$roll = asin(x/sqrt(x^2 + y^2 + z^2))/pi * 180$$

Herein, pi is the ratio of circumference to diameter. When pitch: [-5, 5] and roll: [-5, 5], the electronic device is placed horizontally (the electronic device is symmetrically placed on the wireless charger). When pitch: [-70, -50] and roll: [-5, 5], the electronic device is placed vertically. When pitch: [50, 70] and roll: [-5, 5], the electronic device is placed vertically upside down. When pitch: [-5, 5] and roll: [-70, -50], the electronic device is placed horizontally in a rightward direction (a position in which the electronic device is placed on the wireless charger is on the right side of the wireless charger, that is, a top end of the electronic device faces the right side). When pitch: [-5, 5] and roll: [50, 70], the electronic device is placed horizontally in a leftward direction (a position in which the electronic device is placed on the wireless charger is on the left side of the wireless charger, that is, a top end of the electronic device faces the left side).

For example, in some embodiments of this application, when the electronic device displays the charging alignment picture of the vertical wireless charger on the display, the processor may first read the charging base picture of the wireless charger from the internal memory and determine coordinates of the center position of the wireless charging transmit coil (that is, the geometric center of the wireless charging transmit coil) in the charging base picture in pixels. In addition, the processor determines coordinates of the center position of the wireless charging receive coil of the electronic device in pixels, and moves the center position (for example, the coordinates of the center position are (600, 900)) of the wireless charging transmit coil in the charging base picture to the center position (for example, the coordinates of the center position are (600, 800)) of the wireless charging receive coil, that is, changes the coordinates (600, 900) of the center position in the charging base picture to the coordinates (600, 800) of the center position of the wireless charging receive coil, that is, draws, in the center position of the wireless charging receive coil, the geometric center of the wireless charging transmit coil in the charging base picture. When the electronic device is vertically placed on the wireless charger, the charging base picture does not need to be rotated, so that two vertical edges of the wireless charger in the charging base picture are parallel to two vertical edges of the screen of the electronic device. When the electronic device is horizontally placed on the wireless charger, the charging base picture is rotated 90 degrees, so that two vertical edges of the wireless charger in the charging base picture are perpendicular to vertical edges of the screen of the mobile phone. Subsequently, the electronic device calculates coordinates of an overlapping part between the screen of the electronic device and the wireless charging base of the wireless charger, cuts out the overlapping part between the screen of the electronic device and the charging base picture of the wireless charger, and displays the overlapping part as the charging alignment picture on the screen.

It should be noted that a size of the charging base picture is corresponding to a size of the wireless charger, and the electronic device displays the charging base picture in the same size. When the size of the picture of the wireless charging base is larger than a size of the screen of the electronic device, for the wireless charging base, the electronic device cuts, in the foregoing manner, out the overlapping part between the screen of the electronic device and the charging base picture of the wireless charger, and displays the overlapping part as the charging alignment picture on the screen. When the size of the picture of the wireless charger base is not larger than the size of the screen of the electronic device, the picture of the wireless charging base is completely displayed on the screen of the electronic device and is displayed as the charging alignment picture on the screen.

According to the wireless charging alignment detection method disclosed in this embodiment of this application, the charging alignment picture is displayed on the screen of the electronic device, so that when the wireless charging base is not accurately aligned with the electronic device, that is, when the electronic device is not in a preferred charging position on the wireless charging base, a user can be prompted to adjust a position of the electronic device on the charging base of the wireless charger. In this way, the electronic device is in the preferred charging position on the wireless charger. When the electronic device is in the preferred charging position on the wireless charger, a charging rate for the electronic device is relatively high. This improves a charging rate of the wireless charger for the electronic device.

In some embodiments of this application, an electronic device is further provided. The following describes the electronic device in embodiments of this application with reference to FIG. 7. FIG. 7 is a schematic diagram of a structure of an electronic device according to an embodiment of this application.

In at least one embodiment, a controller hub 804 communicates with a processor 801 via a multi-branch bus such as a front side bus (FSB), a point-to-point interface such as quick path interconnect (QPI), or a similar connection. The processor 801 executes an instruction for controlling a data processing operation of a general type. In an embodiment, the controller hub 804 includes but is not limited to a graphics memory controller hub (GMCH) (not shown in the figure) and an input/output hub (IOH) (which may be on separate chips) (not shown in the figure). The GMCH includes a memory and a graphics controller and is coupled to the IOH.

The electronic device 800 may further include a coprocessor 806 and a memory 802 coupled to the controller hub 804. Alternatively, one or both of the memory 802 and the GMCH may be integrated into the processor 801 (as described in this application), the memory 802 and the coprocessor 806 are directly coupled to the processor 801 and the controller hub 804, and the controller hub 804 and the IOH are in a single chip.

In an embodiment, the memory 802 may be, for example, a dynamic random access memory (DRAM), a phase change memory (PCM), or a combination thereof. The memory 802 may include one or more tangible and non-transitory computer-readable media for storing data and/or instructions. The computer-readable storage medium stores instructions, and specifically, stores a transitory copy and a permanent copy of the instructions.

In an embodiment, the coprocessor 806 is a dedicated processor, such as a high throughput MIC processor, a network or communication processor, a compression engine, a graphics processor, a GPU, or an embedded processor. An optional property of the coprocessor 806 is represented by a dashed line in FIG. 7.

In an embodiment, the electronic device 800 may further include a network interface (NIC) 803. The network interface 803 may include a transceiver, configured to provide a radio interface for the device 800 to communicate with any other suitable device (for example, a front side module or an antenna). In various embodiments, the network interface 803 may be integrated with another component of the electronic device 800. The network interface 803 may implement a function of a communications unit in the foregoing embodiment.

In an embodiment, as shown in FIG. 7, the electronic device 800 may further include an input/output (I/O) device 805. The input/output (I/O) device 805 may include: a user interface, where this design enables a user to interact with the electronic device 800; a peripheral component interface, where this design enables a peripheral component to interact with the electronic device 800; and/or a sensor, where this design is used to determine an environmental condition and/or position information related to the electronic device 800.

It should be noted that FIG. 7 is merely an example. To be specific, although FIG. 7 shows that the electronic device 800 includes a plurality of components such as the processor 801, the controller hub 804, and the memory 802, in actual application, the device that uses the methods in this application may include only some of the components of the electronic device 800, for example, may include only the processor 801 and the NIC 803. A property of an optional component in FIG. 7 is shown by using a dashed line.

In some embodiments of this application, the instructions stored in the computer-readable storage medium of the electronic device 800 may include instructions that enable, when being executed by at least one unit in the processor, the device to implement the wireless charging alignment detection method mentioned in the foregoing embodiments. When the instructions are run on a computer, the computer is enabled to perform the wireless charging alignment detection method mentioned in the foregoing embodiments.

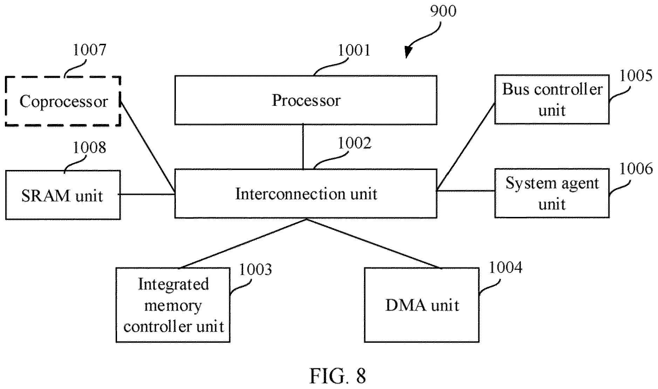

FIG. 8 is a schematic diagram of a structure of an SoC disclosed in an embodiment of this application, and FIG. 8 is a block diagram of an example SoC (System on Chip, system on chip) 900 according to an embodiment of this application. In FIG. 8, similar components have a same reference numeral. In addition, a dashed-line box is an optional feature of a more advanced SoC. The SoC may be used for an electronic device according to an embodiment of this application, and may implement a corresponding function based on instructions stored in the SoC.

In FIG. 8, the SoC 900 includes: an interconnection unit 1002, coupled to a processor 1001; a system agent unit 1006; a bus controller unit 1005; an integrated memory controller unit 1003; a group of or one or more coprocessors 1007, which may include integrated graphics logic, an image processor, an audio processor, and a video processor; a static random access memory (SRAM) unit 1008; and a direct memory access (DMA) unit 1004. In an embodiment, the coprocessor 1007 includes a dedicated processor such as a network or communication processor, a compression engine, a GPU, a high throughput MIC processor, or an embedded processor.

The static random access memory (SRAM) unit 1008 may include one or more computer-readable media for storing data and/or instructions. The computer-readable storage medium may store instructions, and specifically, store a transitory copy and a permanent copy of the instructions.

When the SoC 900 is used in the electronic device according to this application, the instructions stored in the computer-readable storage medium may include instructions that enable, when being executed by at least one unit in the processor, the electronic device to implement the wireless charging alignment detection method mentioned in the foregoing embodiments. When the instructions are run on a computer, the computer is enabled to perform the wireless charging alignment detection method mentioned in the foregoing embodiments.

In addition, an embodiment of this application further discloses a computer-readable storage medium. A processing program is stored in the computer-readable storage medium. When the processing program is executed by a processor, the wireless charging alignment detection method mentioned in the foregoing embodiments is implemented.

The computer-readable storage medium may be a read-only memory, a random access memory, a hard disk, an optical disc, or the like.

## Claims

1. A wireless charging alignment detection method, applied to an electronic device, wherein the electronic device communicates and interacts with a wireless charger, and the method comprises:

    receiving (S505) device information data sent by the wireless charger;
    determining a charging alignment picture based on the device information data; and
    displaying a charging prompt interface, wherein the charging prompt interface comprises the charging alignment picture, and is used to prompt or indicate whether the electronic device is placed in a preferred charging position on the wireless charger, wherein
the determining a charging alignment picture based on the device information data specifically comprises:

determining (S506) a model of the wireless charger based on the device information data; performing search based on the model of the wireless charger, to determine whether the electronic device stores a charging base picture corresponding to the model; and
determining (S507) at least a part of the charging base picture as the charging alignment picture if a search result is that the electronic device stores the charging base picture corresponding to the model; or
determining (S508) a picture of a wireless charging receive coil of the electronic device as the charging alignment picture if a search result is that the electronic device does not store the charging base picture corresponding to the model; and
**characterized by**:

determining a type of the wireless charger based on the model of the wireless charger, wherein the type of the wireless charger comprises a horizontal charger and a vertical charger; and
if a determining result is that the type of the wireless charger is the vertical charger, the displaying a charging prompt interface specifically comprises:

determining a posture of the electronic device, wherein the posture of the electronic device comprises a vertically placed state and a horizontally placed state; and
drawing, based on the posture of the electronic device in a position corresponding to a center of the wireless charging receive coil on a screen of the electronic device, a geometric center of a wireless charging transmit coil in a charging base picture of the vertical charger, and displaying an overlapping part between the charging base picture and the screen of the electronic device as the charging alignment picture in the charging prompt interface.

2. The wireless charging alignment detection method according to claim 1, wherein the method further comprises:

determining a type of the wireless charger based on the model of the wireless charger, wherein the type of the wireless charger comprises a horizontal charger and a vertical charger; and
if a determining result is that the type of the wireless charger is the horizontal charger, the displaying a charging prompt interface specifically comprises:
drawing, in a position corresponding to a center of the wireless charging receive coil on a screen of the electronic device, a geometric center of a wireless charging transmit coil in a charging base picture of the horizontal charger, and displaying an overlapping part between the charging base picture and the screen of the electronic device as the charging alignment picture in the charging prompt interface.

3. The wireless charging alignment detection method according to claim 2, wherein the position corresponding to the center of the wireless charging receive coil is a position of the center of the wireless charging receive coil on a surface of the screen of the electronic device, and the position is determined based on a pixel of the screen of the electronic device.

4. The wireless charging alignment detection method according to claim 1, wherein the position corresponding to the center of the wireless charging receive coil is a position of the center of the wireless charging receive coil on a surface of the screen of the electronic device, and the position is determined based on a pixel of the screen of the electronic device.

5. The wireless charging alignment detection method according to any one of claims 1 to 4, wherein

when the electronic device is placed in the preferred charging position on the wireless charger, a charging rate displayed on the screen of the electronic device is higher than a preset value; or
when the electronic device is not placed in the preferred charging position on the wireless charger, a charging rate displayed on the screen of the electronic device is lower than the preset value.

6. The wireless charging alignment detection method according to any one of claims 1 to 4, wherein
the charging prompt interface comprises a first identifier, and the first identifier is used to indicate a center position of the wireless charging receive coil in the electronic device.

7. The wireless charging alignment detection method according to any one of claims 1 to 4, wherein the charging prompt interface further comprises at least one of a current battery level of the electronic device, a charging time, a charging rate, and a charging status.

8. The wireless charging alignment detection method according to any one of claims 1 to 4, wherein the method further comprises: storing the charging alignment picture.

9. The wireless charging alignment detection method according to any one of claims 1 to 4, wherein before the receiving device information data sent by the wireless charger, the method further comprises:

sending, by the electronic device, a private protocol to the wireless charger, wherein
the device information data is device information data sent by the wireless charger to the electronic device in response to the private protocol.

10. The wireless charging alignment detection method according to claim 9, wherein the sending, by the electronic device, a private protocol to the wireless charger comprises:
sending, by the electronic device, the private protocol to the wireless charger in response to a communication signal sent by the wireless charger, wherein the communication signal is a PING signal.

11. An electronic device, comprising:

a memory, wherein the memory stores code; and
a processor, wherein when the processor executes the code, the electronic device is enabled to implement the wireless charging alignment detection method according to any one of claims 1 to 10.


**Patentansprüche**

1. Ausrichtungserkennungsverfahren für kabelloses Laden, das auf eine elektronische Vorrichtung angewendet wird, wobei die elektronische Vorrichtung mit einem kabellosen Ladegerät kommuniziert und interagiert, und das Verfahren umfasst:

Empfangen (S505) von Vorrichtungsinformationsdaten, die durch das kabellose Ladegerät gesendet werden;
Bestimmen eines Ladeausrichtungsbilds basierend auf den Vorrichtungsinformationsdaten; und
Anzeigen einer Ladeaufforderungsschnittstelle, wobei die Ladeaufforderungsschnittstelle das Ladeausrichtungsbild umfasst und verwendet wird, um aufzufordern oder anzugeben, ob die elektronische Vorrichtung in einer bevorzugten Ladeposition auf dem drahtlosen Ladegerät platziert ist, wobei
das Bestimmen eines Ladeausrichtungsbilds basierend auf den Vorrichtungsinformationsdaten speziell umfasst:

Bestimmen (S506) eines Modells des kabellosen Ladegeräts basierend auf den Vorrichtungsinformationsdaten; Durchführen einer Suche basierend auf dem Modell des kabellosen Ladegeräts, um zu bestimmen, ob die elektronische Vorrichtung ein Ladebasisbild speichert, das dem Modell entspricht; und
Bestimmen (S507) von mindestens einem Teil des Ladebasisbilds als das Ladeausrichtungsbild, falls ein Suchergebnis ist, dass die elektronische Vorrichtung das Ladebasisbild speichert, das dem Modell entspricht; oder
Bestimmen (S508) eines Bilds einer Empfangsspule für drahtloses Laden der elektronischen Vorrichtung als das Ladeausrichtungsbild, falls ein Suchergebnis ist, dass die elektronische Vorrichtung das Ladebasisbild, das dem Modell entspricht, nicht speichert; und
**gekennzeichnet durch**:

Bestimmen eines Typs des drahtlosen Ladegeräts basierend auf dem Modell des drahtlosen Ladegeräts, wobei der Typ des drahtlosen Ladegeräts ein horizontales Ladegerät und ein vertikales Ladegerät umfasst; und
falls ein Bestimmungsergebnis ist, dass der Typ des kabellosen Ladegeräts das vertikale Ladegerät ist, das Anzeigen einer Ladeaufforderungsschnittstelle speziell umfasst:
Bestimmen einer Stellung der elektronischen Vorrichtung, wobei die Stellung der elektronischen Vorrichtung einen vertikal platzierten Zustand und einen horizontal platzierten Zustand umfasst; und

Zeichnen, basierend auf der Stellung der elektronischen Vorrichtung in einer Position, die einem Mittelpunkt der Empfangsspule für kabelloses Laden auf einem Bildschirm der elektronischen Vorrichtung entspricht, eines geometrischen Mittelpunkts einer Übertragungsspule für kabelloses Laden in einem Ladebasisbild des vertikalen Ladegeräts, und Anzeigen eines überlappenden Teils zwischen dem Ladebasisbild und dem Bildschirm der elektronischen Vorrichtung als das Ladeausrichtungsbild in der Ladeaufforderungsschnittstelle.

2.  Ausrichtungserkennungsverfahren für kabelloses Laden nach Anspruch 1, wobei das Verfahren ferner umfasst:

Bestimmen eines Typs des drahtlosen Ladegeräts basierend auf dem Modell des drahtlosen Ladegeräts, wobei der Typ des drahtlosen Ladegeräts ein horizontales Ladegerät und ein vertikales Ladegerät umfasst; und falls ein Bestimmungsergebnis ist, dass der Typ des kabellosen Ladegeräts das horizontale Ladegerät ist, das Anzeigen einer Ladeaufforderungsschnittstelle speziell umfasst:
Zeichnen, in einer Position, die einem Mittelpunkt der Empfangsspule für kabelloses Laden auf einem Bildschirm der elektronischen Vorrichtung entspricht, eines geometrischen Mittelpunkts einer Übertragungsspule für kabelloses Laden in einem Ladebasisbild des horizontalen Ladegeräts, und Anzeigen eines überlappenden Teils zwischen dem Ladebasisbild und dem Bildschirm der elektronischen Vorrichtung als das Ladeausrichtungsbild in der Ladeaufforderungsschnittstelle.

3.  Ausrichtungserkennungsverfahren für kabelloses Laden nach Anspruch 2, wobei die Position, die dem Mittelpunkt der Empfangsspule für kabelloses Laden entspricht, eine Position des Mittelpunkts der Empfangsspule für kabelloses Laden auf einer Oberfläche des Bildschirms der elektronischen Vorrichtung ist und die Position basierend auf einem Pixel des Bildschirms der elektronischen Vorrichtung bestimmt wird.

4.  Ausrichtungserkennungsverfahren für kabelloses Laden nach Anspruch 1, wobei die Position, die dem Mittelpunkt der Empfangsspule für kabelloses Laden entspricht, eine Position des Mittelpunkts der Empfangsspule für kabelloses Laden auf einer Oberfläche des Bildschirms der elektronischen Vorrichtung ist und die Position basierend auf einem Pixel des Bildschirms der elektronischen Vorrichtung bestimmt wird.

5.  Ausrichtungserkennungsverfahren für kabelloses Laden nach einem der Ansprüche 1 bis 4, wobei

wenn die elektronische Vorrichtung in der bevorzugten Ladeposition auf dem kabellosen Ladegerät platziert ist, eine Laderate, die auf dem Bildschirm der elektronischen Vorrichtung angezeigt wird, höher als ein voreingestellter Wert ist; oder
wenn die elektronische Vorrichtung nicht in der bevorzugten Ladeposition auf dem kabellosen Ladegerät platziert ist, die Laderate, die auf dem Bildschirm der elektronischen Vorrichtung angezeigt wird, niedriger als der voreingestellte Wert ist.

6.  Ausrichtungserkennungsverfahren für kabelloses Laden nach einem der Ansprüche 1 bis 4, wobei die Ladeaufforderungsschnittstelle eine erste Kennung umfasst, und die erste Kennung verwendet wird, um eine Mittelposition der Empfangsspule für drahtloses Laden in der elektronischen Vorrichtung anzugeben.

7.  Ausrichtungserkennungsverfahren für kabelloses Laden nach einem der Ansprüche 1 bis 4, wobei die Ladeaufforderungsschnittstelle ferner mindestens eines von einem aktuellen Batteriestand der elektronischen Vorrichtung, einer Ladezeit, einer Laderate und einem Ladestatus umfasst.

8.  Ausrichtungserkennungsverfahren für kabelloses Laden nach einem der Ansprüche 1 bis 4, wobei das Verfahren ferner umfasst: Speichern des Ladeausrichtungsbilds.

9.  Ausrichtungserkennungsverfahren für kabelloses Laden nach einem der Ansprüche 1 bis 4, wobei das Verfahren vor dem Empfangen von Vorrichtungsinformationsdaten, die durch das drahtlose Ladegerät gesendet werden, ferner umfasst:

Senden, durch die elektronische Vorrichtung, eines privaten Protokolls an das drahtlose Ladegerät, wobei die Vorrichtungsinformationsdaten Vorrichtungsinformationsdaten sind, die durch das kabellose Ladegerät als Reaktion auf das private Protokoll an die elektronische Vorrichtung gesendet werden.

10. Ausrichtungserkennungsverfahren für kabelloses Laden nach Anspruch 9, wobei das Senden, durch die elektronische Vorrichtung, eines privaten Protokolls an das drahtlose Ladegerät umfasst:
Senden, durch die elektronische Vorrichtung, des privaten Protokolls an das drahtlose Ladegerät als Reaktion auf ein Kommunikationssignal, das durch das drahtlose Ladegerät gesendet wird, wobei das Kommunikationssignal ein PING-Signal ist.

**11.** Elektronische Vorrichtung, umfassend:

einen Speicher, wobei der Speicher Code speichert; und
einen Prozessor, wobei, wenn der Prozessor den Code ausführt, die elektronische Vorrichtung aktiviert wird, um das Ausrichtungserkennungsverfahren für kabelloses Laden nach einem der Ansprüche 1 bis 10 umzusetzen.

**Revendications**

**1.** Procédé de détection d'alignement de chargement sans fil, appliqué à un dispositif électronique, dans lequel le dispositif électronique communique et interagit avec un chargeur sans fil, et le procédé comprend :

la réception (S505) de données d'information sur le dispositif envoyées par le chargeur sans fil ;
la détermination d'une image d'alignement de charge sur la base des données d'information sur le dispositif ; et
l'affichage d'une interface de demande de charge, dans lequel l'interface de demande de charge comprend l'image d'alignement de la charge et est utilisée pour demander ou indiquer si le dispositif électronique est placé dans une position de charge préférée sur le chargeur sans fil, dans lequel
la détermination d'une image d'alignement de charge sur la base des données d'information du dispositif comprend spécifiquement :

la détermination (S506) d'un modèle du chargeur sans fil sur la base des données d'information sur le dispositif ; la réalisation d'une recherche sur la base du modèle du chargeur sans fil, afin de déterminer si le dispositif électronique stocke une image de base de charge correspondant au modèle ; et
la détermination (S507) d'au moins une partie de l'image de base de charge en tant qu'image d'alignement de charge si le résultat de la recherche est que le dispositif électronique stocke l'image de base de charge correspondant au modèle ; ou
la détermination (S508) d'une image d'une bobine de réception de charge sans fil du dispositif électronique comme image d'alignement de charge si un résultat de recherche est que le dispositif électronique ne stocke pas l'image de base de charge correspondant au modèle ; et
**caractérisé par** :

la détermination du type du chargeur sans fil en fonction du modèle du chargeur sans fil, dans lequel le type de chargeur sans fil comprend un chargeur horizontal et un chargeur vertical ; et
si un résultat de la détermination est que le type du chargeur sans fil est le chargeur vertical, l'affichage d'une interface de demande de charge comprend spécifiquement :

la détermination d'une posture du dispositif électronique, dans lequel la posture du dispositif électronique comprend un état placé verticalement et un état placé horizontalement ; et
le dessin, sur la base de la posture du dispositif électronique dans une position correspondant à un centre de la bobine de réception de charge sans fil sur un écran du dispositif électronique, un centre géométrique d'une bobine de transmission de charge sans fil dans une image de base de charge du chargeur vertical, et l'affichage d'une partie de chevauchement entre l'image de base de charge et l'écran du dispositif électronique en tant qu'image d'alignement de charge dans l'interface de demande de charge.

**2.** Procédé de détection d'alignement de charge sans fil selon la revendication 1, dans lequel le procédé comprend en outre :

la détermination du type du chargeur sans fil en fonction du modèle du chargeur sans fil, dans lequel le type de chargeur sans fil comprend un chargeur horizontal et un chargeur vertical ; et
si un résultat de détermination est que le type de chargeur sans fil est le chargeur horizontal, l'affichage d'une interface de demande de charge comprend spécifiquement :

le dessin, dans une position correspondant à un centre de la bobine de réception de charge sans fil sur un écran du dispositif électronique, un centre géométrique d'une bobine de transmission de charge sans fil dans une image de base de charge du chargeur horizontal, et l'affichage d'une partie de chevauchement entre l'image de base de charge et l'écran du dispositif électronique en tant qu'image d'alignement de charge dans l'interface de demande de charge.

3. Procédé de détection d'alignement de charge sans fil selon la revendication 2, dans lequel la position correspondant au centre de la bobine de réception de la charge sans fil est une position du centre de la bobine de réception de la charge sans fil sur une surface de l'écran du dispositif électronique, et la position est déterminée sur la base d'un pixel de l'écran du dispositif électronique.

4. Procédé de détection d'alignement de charge sans fil selon la revendication 1, dans lequel la position correspondant au centre de la bobine de réception de la charge sans fil est une position du centre de la bobine de réception de la charge sans fil sur une surface de l'écran du dispositif électronique, et la position est déterminée sur la base d'un pixel de l'écran du dispositif électronique.

5. Procédé de détection d'alignement de charge sans fil selon l'une quelconque des revendications 1 à 4, dans lequel

lorsque le dispositif électronique est placé dans la position de charge préférée sur le chargeur sans fil, un taux de charge affiché sur l'écran du dispositif électronique est supérieur à une valeur prédéfinie ; ou
lorsque le dispositif électronique n'est pas placé dans la position de charge préférée sur le chargeur sans fil, un taux de charge affiché sur l'écran du dispositif électronique est inférieur à la valeur prédéfinie.

6. Procédé de détection d'alignement de charge sans fil selon l'une quelconque des revendications 1 à 4, dans lequel l'interface de demande de charge comprend un premier identifiant, et le premier identifiant est utilisé pour indiquer une position centrale de la bobine de réception de charge sans fil dans le dispositif électronique.

7. Procédé de détection d'alignement de charge sans fil selon l'une quelconque des revendications 1 à 4, dans lequel l'interface de demande de charge comprend en outre au moins l'un des éléments suivants : un niveau actuel de la batterie du dispositif électronique, un temps de charge, un taux de charge et un état de charge.

8. Procédé de détection d'alignement de charge sans fil selon l'une quelconque des revendications 1 à 4, dans lequel le procédé comprend en outre : le stockage de l'image d'alignement de charge.

9. Procédé de détection d'alignement de charge sans fil selon l'une quelconque des revendications 1 à 4, dans lequel, avant la réception des données d'information sur le dispositif envoyées par le chargeur sans fil, le procédé comprend en outre :

l'envoi, par le dispositif électronique, d'un protocole privé au chargeur sans fil, dans lequel
les données d'information sur le dispositif sont des données d'information sur le dispositif envoyées par le chargeur sans fil au dispositif électronique en réponse au protocole privé.

10. Procédé de détection d'alignement de charge sans fil selon la revendication 9, dans lequel l'envoi, par le dispositif électronique, d'un protocole privé au chargeur sans fil comprend :
l'envoi, par le dispositif électronique, du protocole privé au chargeur sans fil en réponse à un signal de communication envoyé par le chargeur sans fil, dans lequel le signal de communication est un signal PING.

11. Dispositif électronique, comprenant :

une mémoire, dans lequel la mémoire stocke un code ; et
un processeur, dans lequel, lorsque le processeur exécute le code, le dispositif électronique est en mesure de mettre en oeuvre le procédé de détection d'alignement de charge sans fil selon l'une quelconque des revendications 1 à 10.

FIG. 1A

FIG. 1B

FIG. 2A

FIG. 2B

FIG. 2C

FIG. 2D

FIG. 2E

FIG. 2F

FIG. 2G

FIG. 2H

FIG. 2I

FIG. 2J

FIG. 2K

FIG. 2L

FIG. 2M

FIG. 3A

FIG. 3B

FIG. 3C

FIG. 3D

FIG. 3E

FIG. 3F

FIG. 3G

FIG. 3H

FIG. 4A

FIG. 4B

FIG. 4C

203

2032

2031

2030

FIG. 4D

2030
Direct current input
power supply

20300

20301

2031

Main control
chip

FIG. 4E

Mobile phone 10

FIG. 5A

| Application layer | Camera | WeChat | Memo | Exercise | Mailbox | Application store |
|---|---|---|---|---|---|---|
| | Contacts | Music | Gallery | Settings | Cloud sharing | ... |

| Application framework layer | Display policy service | Power manager service | Display manager service |
|---|---|---|---|
| | Window manager | Notification manager | ... |

| System library | Surface manager | Three-dimensional graphics processing library | Android runtime |
|---|---|---|---|
| | Two-dimensional graphics engine | Media library | ... | |

| Kernel layer | Display driver | Camera driver | |
|---|---|---|---|
| | Audio driver | Sensor driver | ... |

FIG. 5B

```
┌─────────────┐                                    ┌─────────────┐
│  Wireless   │                                    │ Electronic  │
│   charger   │                                    │   device    │
└─────────────┘                                    └─────────────┘
```

Step S500: Send a PING signal

Step S501: Return a signal strength packet

Step S502: Send an identification packet and a configuration packet

Step S503: Send a private protocol

Respond to the private protocol

Step S504: Send device information

FIG. 6A

An electronic device receives device information

S505

Whether a model of a wireless charger in the device information can be identified

S506

Yes

The electronic device determines a type of the wireless charger with the model

S507

Horizontal

No

S508

Vertical  S510

The electronic device displays a picture of a wireless charging receive coil of the electronic device in a charging prompt interface on a screen

The electronic device determines whether a posture of the electronic device is vertical or horizontal

S509

Display at least a part of a charging base picture on a screen of the electronic device

FIG. 6B

FIG. 6C

FIG. 7

900

1007        1001

1005

Coprocessor

Processor

Bus controller
unit

1008        1002

1006

SRAM unit

Interconnection unit

System agent
unit

Integrated
memory
controller unit

1003

DMA unit

1004

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112152277 A